(19) **Europäisches Patentamt**

**European Patent Office**

**Office européen des brevets**

(11) **EP 1 560 372 B1**

(12) **FASCICULE DE BREVET EUROPÉEN**

(45) Date de publication et mention
de la délivrance du brevet:
**29.11.2006 Bulletin 2006/48**

(51) Int Cl.:
*H04L 12/40* *(2006.01)*    *H04L 12/24* *(2006.01)*

(21) Numéro de dépôt: **05364003.3**

(22) Date de dépôt: **13.01.2005**

(54) **Procédé et dispositif de détection automatique du débit d'un réseau de type bus CAN.**

Verfahren und Vorrichtung zur automatischen Erkennung der Bitrate von CAN-Bus-Netzwerk

Method and device for automatically detecting the bit rate of a CAN bus network

(84) Etats contractants désignés:
**DE ES GB IT NL**

(30) Priorité: **20.01.2004 FR 0400521**

(43) Date de publication de la demande:
**03.08.2005 Bulletin 2005/31**

(73) Titulaire: **ATMEL NANTES SA**
**44306 Nantes Cédex 3 (FR)**

(72) Inventeurs:
• **Birsan, Laurentiu**
**44100 Nantes (FR)**
• **Laurent, Marc**
**44300 Nantes (FR)**
• **Delalande, Thierry**
**44300 Nantes (FR)**
• **Berthy, Jean-Sébastien**
**44390 Petit-Mars (FR)**

(74) Mandataire: **Guéné, Patrick Lucien Juan Joseph**
**Cabinet Vidon**
**Technopole Atalante**
**16B, rue de Jouanet**
**BP 90333**
**F-35703 Rennes Cedex 7 (FR)**

(56) Documents cités:
**FR-A- 2 859 853**        **US-B1- 6 438 462**

• **LEEN G ET AL: "TTCAN: a new time-triggered controller area network" MICROPROCESSORS AND MICROSYSTEMS, IPC BUSINESS PRESS LTD. LONDON, GB, vol. 26, no. 2, 17 mars 2002 (2002-03-17), pages 77-94, XP004339936 ISSN: 0141-9331**
• **ZELTWANGER H: "AN INSIDE LOOK AT THE FUNDAMENTALS OF CAN ORIGINALLY DESIGNED FOR AUTOMOBILES, THE CONTROLLER AREA NETWORK (CAN) IS A SERIAL BUS WITH LARGE POTENTIAL USE IN INDUSTRY" CONTROL ENGINEERING INTERNATIONAL, CAHNERS PUBLISHING, US, vol. 42, no. 1, 1995, pages 51-54,56, XP000500026 ISSN: 0010-8049**

EP 1 560 372 B1

**Description**

Le domaine de l'invention est celui des réseaux de communication.

Plus précisément, l'invention concerne un procédé de détection automatique, par un dispositif connecté à un réseau, du débit de ce réseau et de configuration du dispositif au débit détecté. L'invention concerne également le dispositif mettant en oeuvre ce procédé.

L'invention s'applique notamment, mais non exclusivement, dans le cas où le réseau est de type bus CAN.

A titre illustratif et dans un souci de simplification, on présente maintenant la technique de l'art antérieur et ses inconvénients dans le cas précité où le réseau est de type bus CAN.

On rappelle qu'un bus CAN (« Controller Area Network ») est un bus série permettant de connecter une pluralité de dispositifs, appelés « unités de contrôle » et comprenant chacun un microcontrôleur CAN. Ce type de bus est aujourd'hui principalement utilisé dans le domaine de l'industrie et dans le domaine de l'automobile.

Typiquement, dans une voiture, deux bus CAN sont utilisés. L'un, dit bus CAN haute vitesse (jusqu'à 1 Mb/s), permet d'interconnecter des unités de contrôle relatives aux éléments ou fonctionnalités suivants : tableau de bord, moteur, freinage (anti-verrouillage), suspension active, transmission, etc. L'autre, dit bus CAN basse vitesse (jusqu'à 125 kb/s), permet d'interconnecter des unités de contrôle relatives aux éléments ou fonctionnalités suivants : tableau de bord, éclairage, climatisation, coussins gonflables de sécurité, verrouillage des portes, fenêtres électriques, etc.

Chaque bus CAN met en oeuvre un protocole du même nom (protocole CAN) qui est un protocole de communication série qui supporte des systèmes temps réel avec un haut niveau de fiabilité dans un environnement limité et sévère comme une usine, un atelier, une voiture... Le protocole CAN couvre deux des sept couches du modèle d'interconnexion des systèmes ouverts OSI de l'ISO, à savoir la couche physique (couche 1) et la couche liaison de données (couche 2). Pour plus d'informations sur le bus CAN, on pourra se reporter à la norme ISO 11898, insérée ici par référence.

La couche liaison de données du protocole CAN est telle que chaque unité de contrôle peut émettre et recevoir des données. Les données sont véhiculées sur le bus sous la forme de paquets (aussi appelés trames ou messages) asynchrones de format défini mais de longueur variable et limitée. Dès que le bus est libre, n'importe quelle unité de contrôle reliée au bus peut émettre un nouveau paquet. Un mécanisme d'interruption pour les paquets plus prioritaires est prévu, ainsi qu'un mécanisme d'arbitrage des conflits résultant de l'émission simultanée de plusieurs paquets sur le bus lorsqu'il est libre.

Traditionnellement, quand on souhaite connecter sur un bus CAN une nouvelle unité de contrôle (c'est-à-dire un nouveau dispositif comprenant un microcontrôleur CAN qui exécute une application (couche 7 du modèle OSI)), on procède de la façon suivante. Le développeur de l'application exécutée par le microcontrôleur CAN doit connaître la fréquence horloge du microcontrôleur CAN (par exemple 12 MHz). Il suppose par ailleurs que le débit du réseau prend l'une d'un nombre limité de valeurs (trois valeurs généralement). Par exemple, il suppose que le débit du réseau est égal à 100, 250 ou 500 kb/s. Pour chacune des trois valeurs supposées du débit du réseau, il détermine a priori, et à partir de la connaissance de la fréquence horloge du microcontrôleur CAN, une configuration de débit pour le microcontrôleur CAN. Il développe ensuite l'application de façon que, en fonctionnement, l'application charge une première configuration de débit associée à une première valeur supposée du débit du réseau ; si l'application reçoit des messages d'erreur, elle charge une deuxième configuration de débit associée à une deuxième valeur supposée du débit du réseau ; et ainsi de suite de façon à tester (si nécessaire) les différentes configurations de débit prédéterminées.

Le document US 6438462 B1 divulgue une méthode selon le préambule de la revendication 1.

Un inconvénient de la technique connue précitée est qu'elle ne peut pas être mise en oeuvre dans les situations où on ne connaît pas la fréquence horloge du microcontrôleur CAN.

Un autre inconvénient de la technique connue précitée est qu'elle ne marche pas si aucune des hypothèses sur le débit du réseau est correcte.

Encore un autre inconvénient de la technique connue précitée est que, lorsque plusieurs configurations de débit possibles sont testées successivement, le microcontrôleur CAN perturbe réellement le bus CAN. Ceci peut même conduire à une éjection du microcontrôleur CAN du bus CAN.

L'invention a notamment pour objectif de pallier ces différents inconvénients de l'état de la technique.

Plus précisément, l'un des objectifs de la présente invention est de fournir un procédé et un dispositif de détection automatique du débit d'un réseau et de configuration au débit détecté, ne nécessitant pas la connaissance de la fréquence horloge du dispositif, ni des hypothèses sur le débit du réseau.

L'invention a également pour objectif de fournir de tels procédé et dispositif ne perturbant pas le réseau.

Un autre objectif de l'invention est de fournir de tels procédé et dispositif qui soient simples à mettre en oeuvre et peu coûteux.

Ces différents objectifs, ainsi que d'autres qui apparaîtront par la suite, sont atteints selon l'invention à l'aide d'un procédé de détection automatique du débit d'un réseau et de configuration au débit détecté par un dispositif connecté au réseau, le réseau transmettant un signal sur lequel sont véhiculés des messages comprenant des bits de longueur $L_{BIT}$ et de type dominant ou récessif. Ce procédé comprend les étapes successives suivantes :

(a) le dispositif passe dans un mode d'écoute, dans lequel il peut recevoir des messages provenant du réseau mais ne peut pas émettre de messages sur le réseau ;

(b) le dispositif obtient un triplet de transitions successives dans le signal transmis sur le réseau, ledit triplet délimitant un premier et un second niveaux du signal, l'un dominant et l'autre récessif ;

(c) le dispositif mesure la durée, exprimée en nombre de période $T_H$ d'une horloge du dispositif, de chacun des premier et second niveaux ;

(d) en fonction des durées mesurées des niveaux du signal, le dispositif obtient une nouvelle configuration de débit en déterminant des valeurs pour des paramètres définissant la longueur de bit $L_{BIT}$;

(e) le dispositif valide la nouvelle configuration de débit ;

(g) si le dispositif détecte qu'au moins une condition d'adaptation de débit est vérifiée, il passe dans un mode normal, sinon il obtient une transition suivante du signal, qui délimite avec la dernière transition précédente un nouveau niveau du signal, il mesure la durée du nouveau niveau, exprimée en nombre de période $T_H$ de l'horloge du dispositif, et il réitère les étapes (d) à (g) en tenant compte du nouveau niveau du signal.

Le principe général de l'invention consiste donc à passer dans un mode d'écoute, permettant de ne pas perturber le réseau, pour effectuer un calcul de la longueur de bit $L_{bit}$ (parfois aussi appelée « TimeBit » dans la suite de la description) basé sur une analyse des transitions que présente le signal transmis sur le réseau. L'invention ne nécessite donc ni la connaissance de la fréquence horloge du dispositif, ni hypothèse sur le débit du réseau.

Dans un mode de réalisation avantageux de l'invention, le réseau est un bus CAN, et le dispositif comprend un microcontrôleur CAN complété par rapport à un microcontrôleur CAN classique de façon à mettre en oeuvre le procédé selon l'invention de détection automatique du débit du réseau et de configuration au débit détecté.

On suppose par exemple que la longueur de bit $L_{BIT}$ est définie par :

- un scalaire BRP, tel que : TQ = BRP * $T_H$, avec TQ une unité de temps et $T_H$ la période de l'horloge du dispositif ;
- des longueurs exprimées en nombre d'unité de temps TQ : longueur $L_{SYNC}$ d'un segment de synchronisation, longueur $L_{PRS}$ d'un segment de propagation visant à compenser un délai physique sur le bus CAN, longueurs $L_{PHS1}$ et $L_{PHS2}$ de premier et second segments de phase permettant de positionner un point d'échantillonnage.

Avantageusement, dans ce contexte, l'étape (d) comprend elle-même les étapes suivantes :

(d0) le dispositif met à jour deux registres d'historique, de façon telle que :

- après la première itération de l'étape (d), les registres contiennent respectivement le minimum P et le maximum G des durées des premier et second niveaux ;
- après chaque itération suivante de l'étape (d), les registres sont mis à jour selon l'équation suivante : si G < X, alors G prend la valeur X, sinon P prend la valeur X, avec X la durée dudit nouveau niveau du signal;

(d1) en fonction du contenu P et G desdits registres d'historique, le dispositif obtient un nombre m permettant d'exprimer la longueur de bit $L_{BIT}$ en fonction de la période $T_H$ de l'horloge du dispositif : $L_{BIT} = m * T_H$;

(d2) en fonction du nombre m préalablement obtenu, le dispositif obtient une valeur maximale $BRP_{MAX}$ du scalaire BRP sachant que :

(i) $L_{BIT} = m * T_H = n * BRP * T_H$, d'où: m = n*BRP

(ii) n = $L_{BIT}$ / TQ

(iii) n ≤ $n_{MAX}$, avec $n_{MAX}$ un nombre maximal prédéterminé d'unité de temps TQ que peut comprendre la longueur de bit $L_{BIT}$;

(d3) en fonction du nombre m et de la valeur maximale $BRP_{max}$ préalablement obtenus, le dispositif obtient une valeur du nombre n telle que : n = m / $BRP_{MAX}$;

(d4) en fonction du nombre n préalablement obtenu, le dispositif obtient des valeurs pour la longueur $L_{SYNC}$ du segment de synchronisation, la longueur $L_{PRS}$ du segment de propagation et les longueurs $L_{PHS1}$ et $L_{PHS2}$ des premier et second segments de phase.

De façon avantageuse, dans l'étape (d1), la valeur du nombre m est donnée par les équations suivantes :

- m = min (2P-G, G-P), si P < G < 2P,
- m = min (G-2P, P), si 2P < G < 6P,
- m = P/2, si G = 2P,

- m n'est pas calculé dans les autres cas.

Selon une variante préférentielle, dans l'étape (d1), les conditions d'application des équations donnant la valeur du nombre m sont modifiées comme suit :

- m = min (2P-G, G-P), si P + P/k < G ≤ 2(P - P/k),
- m = min (G-2P, P), si 2(P + P/k) < G < 6(P - P/k),
- m = P/2, si 2(P - P/k) < G ≤ 2(P + P/k),
- m n'est pas calculé dans les autres cas,

avec k un nombre entier prédéterminé supérieur ou égal à 4, et préférentiellement égal à 8.

Avantageusement, dans l'étape (d4), on utilise une table de correspondance prédéterminée, associant à chaque valeur du nombre n un jeu de valeurs pour la longueur $L_{SYNC}$ du segment de synchronisation, la longueur $L_{PRS}$ du segment de propagation et les longueurs $L_{PHS1}$ et $L_{PHS2}$ des premier et second segments de phase.

Dans un mode de réalisation avantageux de l'invention, ladite au moins une condition d'adaptation de débit de l'étape (g) est la réception de façon correcte (Rx OK) d'un message provenant du réseau.

De façon préférentielle, l'étape (g) est précédée de l'étape suivante :

(f) si le dispositif détecte la bonne réception de la partie utile d'un message provenant du réseau, il passe temporairement dans le mode normal pour envoyer un champ d'acquittement (ACK) sur le réseau puis repasse dans le mode d'écoute, sinon il obtient une transition suivante du signal, qui délimite avec la dernière transition précédente un nouveau niveau du signal, il mesure la durée du nouveau niveau, exprimée en nombre de période $T_H$ de l'horloge du dispositif, et il réitère les étapes (d) à (g) en tenant compte du nouveau niveau du signal.

L'envoi du champ d'acquittement (ACK) permet à l'autre dispositif ayant émis le message d'être informé que son message a bien été transmis sur le réseau et donc de ne pas émettre de message d'erreur. Cette caractéristique de l'invention est particulièrement intéressante dans le cas où seul le dispositif de l'invention est en mesure d'envoyer un champ d'acquittement (ACK) à l'autre dispositif.

L'invention concerne également un dispositif comprenant des moyens permettant la mise en oeuvre de l'un quelconque des modes de réalisation du procédé précité. Ainsi, l'invention concerne un dispositif comprenant :

- des moyens de basculement d'un mode normal à un mode d'écoute, dans lequel sont activés des moyens de blocage de messages émis par le dispositif vers le réseau, le dispositif continuant à recevoir des messages provenant du réseau ;
- des moyens d'obtention d'un triplet de transitions successives dans le signal transmis sur le réseau, ledit triplet délimitant un premier et un second niveaux du signal, l'un dominant et l'autre récessif ;
- des moyens de mesure de la durée, exprimée en nombre de période $T_H$ d'une horloge du dispositif, de chacun des premier et second niveaux du signal ;
- des moyens d'obtention, en fonction des durée mesurées des niveaux du signal, d'une nouvelle configuration de débit par détermination de valeurs pour des paramètres définissant la longueur de bit $L_{BIT}$ ;
- des moyens de validation de la nouvelle configuration de débit ;
- des moyens de détection qu'au moins une condition d'adaptation de débit est vérifiée ;
- des moyens de basculement du mode d'écoute au mode normal, activés en cas de détection positive par les moyens de détection ;
- des moyens d'obtention d'une transition suivante du signal, qui délimite avec la dernière transition précédente un nouveau niveau du signal, et des moyens de mesure de la durée du nouveau niveau, exprimée en nombre de période $T_H$ de l'horloge du dispositif, activés avec lesdits moyens d'obtention et de validation d'une nouvelle configuration de débit et lesdits moyens de détection qu'au moins une condition d'adaptation de débit est vérifiée, en cas de détection négative par les moyens de détection, de façon à tenir compte dudit nouveau niveau du signal.

Dans un mode de réalisation avantageux de l'invention, le réseau est un bus CAN, et en ce que le dispositif comprend un microcontrôleur CAN complété par rapport à un microcontrôleur CAN classique et comprenant lui-même lesdits moyens de détection automatique du débit du réseau et de configuration au débit détecté.

De façon avantageuse, les moyens de basculement du mode normal au mode d'écoute comprennent des moyens de génération d'un signal de sélection de mode (Autobaud), prenant la valeur « 0 » ou « 1 » selon que le dispositif doit fonctionner dans le mode normal ou d'écoute respectivement. En outre, le microcontrôleur CAN complété comprend un microcontrôleur CAN classique modifié pour comprendre lui-même lesdits moyens de détection automatique du débit du réseau et de configuration au débit détecté, hormis lesdits moyens de blocage de messages émis.

Enfin, les moyens de blocage de messages émis comprennent des moyens de réalisation de la fonction logique « OU » entre le signal de sélection de mode et le signal d'émission (TxDC') du microcontrôleur CAN classique modifié, le signal de sortie des moyens de réalisation de la fonction logique « OU » constituant le signal d'émission (TxDC) du microcontrôleur CAN complété.

Avantageusement, le microcontrôleur CAN complété comprend en outre des moyens de rebouclage de la sortie sur l'entrée du microcontrôleur CAN classique modifié, comprenant :

- des moyens de réalisation de la fonction logique « ET » entre le signal d'émission (TxDC') du microcontrôleur CAN classique modifié et le signal de réception (RxDC) du microcontrôleur CAN complété ;
- des moyens de multiplexage recevant sur une première entrée le signal de sortie des moyens de réalisation de la fonction logique « ET » et sur une deuxième entrée le signal de réception (RxDC) du microcontrôleur CAN complété, le signal de sortie des moyens de multiplexage constituant le signal de réception (RxDC') du microcontrôleur CAN classique modifié, les moyens de multiplexage étant commandés par le signal de sélection de mode de façon que la première ou la seconde entrée soit sélectionnée selon que le signal de sélection de mode prend la valeur « 1 » ou « 0 » respectivement.

Selon une caractéristique avantageuse, le microcontrôleur CAN complété comprend en outre des moyens de basculement temporaire du mode d'écoute au mode normal, de façon à envoyer un champ d'acquittement (ACK) sur le réseau.

De façon avantageuse, les moyens de basculement temporaire du mode d'écoute au mode normal comprennent des moyens de génération d'un signal (EnAckB) de désactivation temporaire du signal de sélection de mode, prenant la valeur « 0 » ou « 1 » selon que le signal de sélection de mode (Autobaud) doit être désactivé temporairement ou non.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un synoptique d'un système connu d'interconnexion d'une pluralité de dispositifs par l'intermédiaire d'un bus CAN, système dans lequel peut être mis en oeuvre le procédé selon l'invention de détection et configuration automatique de débit ;
- la figure 2 illustre la structure connue de chaque bit compris dans un message véhiculé sur un bus CAN ;
- la figure 3 présente un schéma bloc fonctionnel d'un exemple de réalisation d'un dispositif apparaissant sur la figure 1 et permettant la mise en oeuvre du procédé selon l'invention ;
- la figure 4 présente un mode de réalisation particulier du bloc d'adaptation électronique apparaissant sur la figure 3 ;
- la figure 5 illustre représente un organigramme d'un mode de réalisation particulier du procédé selon l'invention ;
- la figure 6 illustre l'obtention de transitions dans le signal et la mesure de la durée des niveaux délimités par ces transitions, ces opérations étant mises en oeuvre dans certaines étapes ((b), (c) et (f3/g3)) apparaissant sur l'organigramme de la figure 5 ;
- la figure 7 représente un algorithme de mise en oeuvre de l'étape (d0) de mise à jour de deux registres d'historique contenant des nombres P et G utilisés dans l'étape (d1) d'obtention du nombre m, apparaissant sur l'organigramme de la figure 5 ;
- la figure 8 illustre un exemple de signal transmis sur le réseau, avec ses transitions, et les valeurs des nombres P et G obtenues avec l'algorithme de la figure 7 ;
- la figure 9 représente un algorithme de mise en oeuvre de l'étape (d1) d'obtention du nombre m, apparaissant sur l'organigramme de la figure 5 ;
- la figure 10 présente un schéma bloc d'un exemple de circuit mettant en oeuvre l'étape (d2) d'obtention de la valeur maximale $BRP_{MAX}$ du scalaire BRP, apparaissant sur l'organigramme de la figure 5 ;
- la figure 11 présente un schéma bloc d'un exemple de circuit mettant en oeuvre l'étape d'obtention (d3) d'un nombre n, apparaissant sur l'organigramme de la figure 5 ;
- la figure 12 illustre un exemple de table de correspondance utilisée au cours de l'étape (d4), apparaissant sur l'organigramme de la figure 5, d'obtention de valeurs pour la longueur $L_{SYNC}$ du segment de synchronisation, la longueur $L_{PRS}$ du segment de propagation et les longueurs $L_{PHS1}$ et $L_{PHS2}$ des premier et second segments de phase ;
- la figure 13 est un schéma bloc d'un mode de réalisation particulier du microcontrôleur CAN classique modifié selon l'invention, apparaissant sur la figure 3 ;
- la figure 14 illustre un exemple de réalisation du changement de valeur du registre de signal de sélection de mode (« Autobaud ») apparaissant sur la figure 13;
- la figure 15 illustre une variante de réalisation du changement de valeur du registre de signal de sélection de mode (« Autobaud ») ;

- la figure 16 présente une vue dynamique illustrant le fonctionnement du procédé selon l'invention.

L'invention concerne donc un procédé et un dispositif de détection automatique du débit d'un réseau et de configuration au débit détecté.

Dans la suite de la description, on considère uniquement le cas où le réseau est un bus CAN. Il est clair cependant que l'invention s'applique également à d'autres types de réseau.

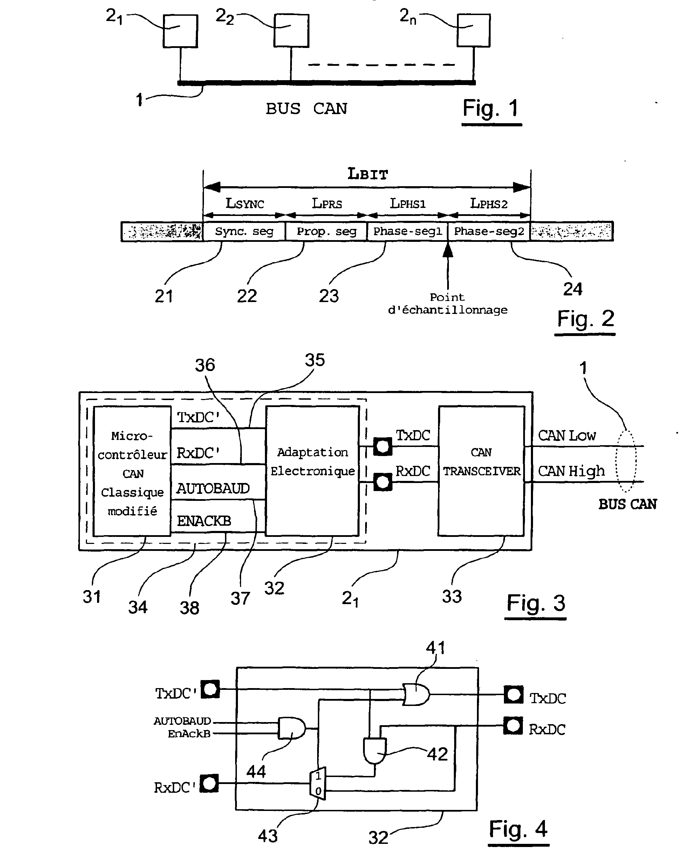

Comme déjà indiqué ci-dessus et illustré sur le synoptique de la **figure 1,** un bus CAN 1 est un bus série permettant de connecter une pluralité de dispositifs $2_1$, $2_2$... $2_n$, appelés « unités de contrôle » et comprenant chacun un microcontrôleur CAN.

On rappelle maintenant brièvement quelques caractéristiques essentielles du protocole CAN, qui est un protocole de communication série mis en oeuvre par un bus CAN. Pour plus d'informations sur ce protocole CAN et le bus CAN, on pourra se reporter à la norme ISO 11898, insérée ici par référence.

Le protocole CAN distingue quatre types de messages CAN :

- les message de données (Data Frame), au format standard (identifiant 11-bits) ou étendu (identifiant 29-bits) ;
- les messages de requête de données (Remote Frame) ;
- les messages d'erreur (Error Frame) ;
- les messages de temporisation du réseau (Overload Frame).

Un message CAN standard comprend :

- un champ de début de trame ;
- un champ d'arbitrage, qui est constitué d'un identifiant et d'un bit « Requête de données » utilisé pour distinguer un message de données (Data Frame), d'un message de requête (Remote Frame) ;
- un champ de contrôle, qui contient un bit « Identifiant étendu » (IDE) et un nombre de données (DLC) indiquant le nombre d'octet de données qui suivent dans le champ de données. Dans un message de requête, le nombre DLC est le nombre d'octet de données demandé ;
- un champ de données, pouvant comporter jusqu'à huit octets de données ;
- un champ de vérification (CRC), garantissant l'intégrité du message ;
- un champ d'acquittement (ACK), composé d'un créneau et d'un délimiteur d'acquittement. Le bit dans le créneau d'acquittement est émis à un niveau récessif et est écrasé à un niveau dominant par les dispositifs récepteurs qui ont à ce moment reçu les données correctement ;
- un champ de fin de message (EOF) ;
- un champ d'inter-message (IFS), qui est un nombre minimum de bits séparant deux messages consécutifs.

Le protocole CAN distingue cinq types d'erreurs, qui ne s'excluent pas mutuellement :

- une erreur de bit (« bit error »), lorsque le bit lui-même est entaché d'erreur ;
- une erreur de bourrage (« stuff bit error ») ;
- une erreur d'acquittement (« ACK error ») ;
- une erreur de vérification (« CRC error ») ;
- une erreur de structure.

Un dispositif connecté au bus CAN et qui détecte une condition d'erreur a pour mission de le signaler, en transmettant un message d'erreur. Ces particularités font qu'un dispositif qui se branche sur un bus CAN doit avoir une configuration de débit correct, au risque de mettre le bus CAN existant en péril ou de se voir exclure de ce bus CAN.

On présente maintenant, en relation avec la **figure 2**, la structure connue (« CAN Bit Timing »), et définie dans le protocole CAN, de chaque bit compris dans un message véhiculé sur un bus CAN.

Chaque bit possède une longueur $L_{BIT}$ (aussi appelée « temps nominal $t_{BIT}$ ») et est défini par une structure composée de quatre segments distincts 21 à 24.

Chacun de ces quatre segments est composé d'un nombre entier d'unité de temps (ou TQ, pour « Time Quanta » en anglais). La longueur de cette unité de temps TQ est définie à partir de la fréquence $f_H$ ou de la période $T_H$ de l'horloge du dispositif et d'un scalaire BRP propre au dispositif : $TQ = BRP / f_H = BRP * T_H$

D'une façon générale, la longueur $L_{BIT}$ d'un bit peut s'exprimer soit en nombre d'unités de temps TQ, soit en nombre de périodes $T_H$ de l'horloge du dispositif :

$$L_{BIT} = n * TQ = n * (BRP * T_H) = m * T_H$$

Le nombre n est tel que : $8 \leq n \leq 25$.

Le premier segment est un segment de synchronisation 21 (« synchronization segment »), dont la longueur $L_{SYNC}$ est fixée à une unité de temps TQ.

Le second segment 22 est un segment de propagation (« propagation segment »). Il a pour rôle de compenser le délai physique induit par le bus CAN. Sa longueur $L_{PRS}$ est programmable entre une et huit unités de temps TQ.

Les troisième et quatrième segments 23, 24 (« phase segment 1 » et « phase segment 2 ») sont des segments de phase, utilisés pour positionner un point d'échantillonnage. Leurs longueurs $L_{PHS1}$ et $L_{PHS2}$ sont également programmables.

On présente désormais, en relation avec la **figure 3**, un exemple de réalisation d'un dispositif apparaissant sur la figure 1 (par exemple celui référencé $2_1$) et permettant la mise en oeuvre du procédé selon l'invention.

De façon habituelle, le dispositif $2_1$ comprend un microcontrôleur CAN classique 31 et un circuit émetteur/récepteur CAN 33 (« CAN transceiver »). Ce dernier 33 est spécifique à la couche physique du protocole CAN, et est conçu pour assurer l'interface entre le microcontrôleur CAN classique 31 (qui travaille au niveau logique) et le bus CAN 1 (qui travaille au niveau physique). Le microcontrôleur CAN classique 31 émet un signal 35 (appelé ci-après signal d'émission TxDC') et en reçoit un autre 36 (appelé ci-après signal de réception RxDC').

Selon la présente invention, le microcontrôleur CAN classique 31 est modifié en ce que :

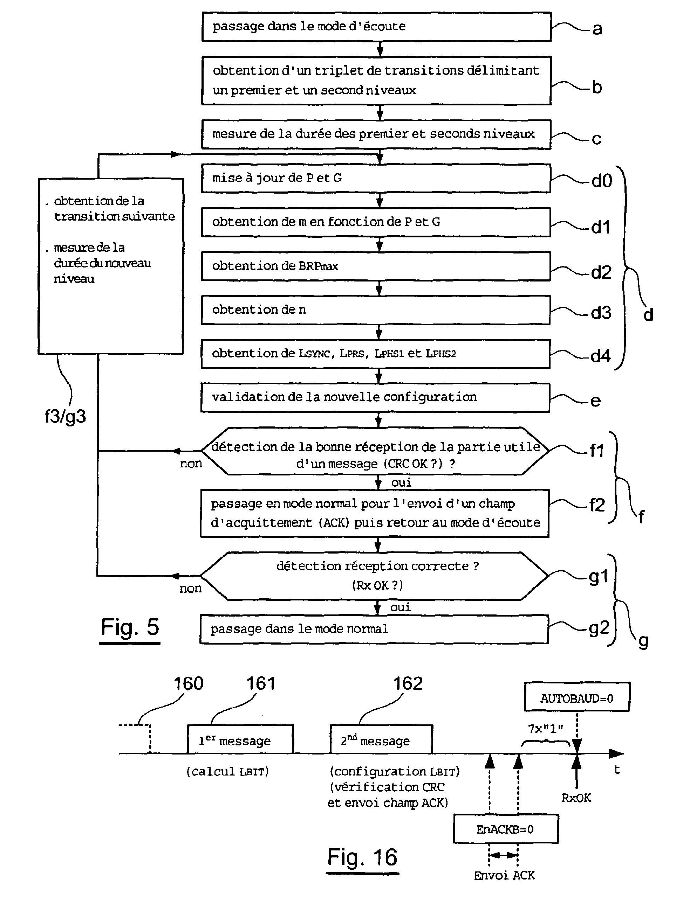

- il exécute un algorithme de détection et configuration automatique de débit (procédé selon l'invention, décrit en détail ci-dessous en relation avec les figures 5 à 16) ;
- il génère deux signaux de commande : un signal (Autobaud) 37 de sélection de mode et un signal 38 (EnAckB) de désactivation temporaire du signal de sélection de mode.

Le dispositif $2_1$ est par ailleurs modifié en ce qu'il comprend en outre un bloc d'adaptation électronique 32, s'interfaçant entre le microcontrôleur CAN classique modifié 31 et le circuit émetteur/récepteur CAN 33.

Le microcontrôleur CAN classique modifié 31 et le bloc d'adaptation électronique 32 forment ensemble un microcontrôleur CAN complété 34, propre à la présente invention.

Ainsi, d'un côté, le bloc d'adaptation électronique 32 reçoit le signal d'émission TxDC' et les deux signaux de commande 37 (Autobaud) et 38 (EnAckB) émis par le microcontrôleur CAN classique modifié 3, et émet le signal de réception RxDC' reçu par le microcontrôleur CAN classique modifié 3. De l'autre côté, le bloc d'adaptation électronique 32 émet le signal d'émission TxDC du microcontrôleur CAN complété 4, et reçoit le signal de réception RxDC' du microcontrôleur CAN complété 4.

Le bloc d'adaptation électronique 32 est commandé par le signal de sélection de mode 37 (Autobaud) de façon que, au cours de l'exécution de l'algorithme précité, le dispositif $2_1$ bascule de l'un à l'autre des modes suivants :

- un mode normal, dans lequel le microcontrôleur CAN classique modifié 31 peut émettre ou recevoir des messages sur ou depuis le bus CAN ;
- un mode d'écoute, dans lequel le microcontrôleur CAN classique modifié 31 peut recevoir des messages venant du bus CAN mais ne peut pas en émettre sur ce bus CAN, et dans lequel le microcontrôleur CAN classique modifié 31 peut recevoir les éventuels messages qu'il émet vers le bus CAN (et qui comme indiqués précédemment sont bloqués avant d'y parvenir).

Le bloc d'adaptation électronique 32 est également commandé par le signal 38 (EnAckB) de désactivation temporaire du signal de sélection de mode . En jouant sur la valeur de ce dernier, on autorise, malgré que le signal de sélection de mode implique un fonctionnement en mode d'écoute (Autobaud = 1), un passage dans le mode normal le temps de l'envoi d'un champ d'acquittement (ACK) d'un message reçu, puis un retour dans le mode d'écoute.

On présente maintenant, en relation avec la **figure 4,** un mode de réalisation particulier du bloc d'adaptation électronique 32 apparaissant sur la figure 3.

Il comprend des moyens de blocage de messages émis par le microcontrôleur CAN classique modifié 31 et des moyens de rebouclage de la sortie sur l'entrée du microcontrôleur CAN classique modifié 31.

Le signal de sélection de mode 37 (Autobaud) prend la valeur « 0 » si le dispositif $2_1$ doit fonctionner dans le mode normal, ou « 1 » pour un fonctionnement dans le mode d'écoute.

Une première porte ET 44 réalise la fonction logique « ET » entre le signal de sélection de mode 37 (Autobaud) et le signal de désactivation temporaire 38 (EnAckB). Ce dernier est actif à l'état « 0 ». Ainsi, quand le signal de désactivation temporaire 38 (EnAckB) est égal à « 1 », la sortie de la première porte ET 44 est égale au signal de sélection de mode 37 (Autobaud). En revanche, quand le signal de désactivation temporaire 38 (EnAckB) est égal à « 0 », la sortie de la première porte ET 44 est forcée à « 0 », ce qui revient à désactiver le signal de sélection de mode 37 (Autobaud).

Les moyens de blocage de messages émis comprennent une porte OU 41, réalisant la fonction logique « OU » entre le signal de sortie de la première porte ET 44 (c'est-à-dire le signal de sélection de mode 37 (Autobaud), sauf s'il est désactivé) et le signal d'émission (TxDC') du microcontrôleur CAN classique modifié 31. Le signal de sortie de la porte OU 41 constitue le signal d'émission (TxDC) du microcontrôleur CAN complété 34.

Ainsi, quand le signal de sélection de mode 37 (Autobaud) prend la valeur « 0 » (mode normal), le signal d'émission (TxDC') du microcontrôleur CAN classique modifié 31 est confondu avec le signal d'émission (TxDC) du microcontrôleur CAN complété 34, et le dispositif $2_1$ peut donc émettre des messages sur le bus CAN.

En revanche, quand le signal de sélection de mode 37 (Autobaud) prend la valeur « 1 » (mode d'écoute) et n'est pas désactivé par le signal de désactivation temporaire 38 (EnAckB), le signal d'émission (TxDC) du microcontrôleur CAN complété 34 vaut toujours « 1 », ce qui correspond à un état de repos du dispositif (puisque « 1 » est l'état récessif du bus CAN) et donc aucun message n'est émis par le dispositif 2, sur le bus CAN.

Les moyens de rebouclage de la sortie sur l'entrée du microcontrôleur CAN classique modifié 31 comprennent :

- une seconde porte ET 42, réalisant la fonction logique « ET » entre le signal d'émission (TxDC') du microcontrôleur CAN classique modifié 31 et le signal de réception (RxDC) du microcontrôleur CAN complété 34 ;
- un multiplexeur 43 recevant sur une première entrée le signal de sortie de la seconde porte ET 42 et sur une deuxième entrée le signal de réception (RxDC) du microcontrôleur CAN complété 34. Le signal de sortie du multiplexeur constitue le signal de réception (RxDC') du microcontrôleur CAN classique modifié 31. Le multiplexeur est commandé par le signal de sortie de la première porte ET 44 (c'est-à-dire le signal de sélection de mode 37 (Autobaud), sauf s'il est désactivé), de façon que la première ou la seconde entrée soit sélectionnée selon que le signal de sélection de mode prend la valeur « 1 » ou « 0 » respectivement.

Ainsi, quand le signal de sélection de mode 37 (Autobaud) prend la valeur « 0 » (mode normal), le signal de réception (RxDC') du microcontrôleur CAN classique modifié 31 est confondu avec le signal de réception (RxDC) du microcontrôleur CAN complété 34, et le dispositif $2_1$ ne reçoit donc que des messages provenant du bus CAN.

En revanche, quand le signal de sélection de mode 37 (Autobaud) prend la valeur « 1 » (mode d'écoute) et n'est pas désactivé par le signal de désactivation temporaire 38 (EnAckB), le signal de réception (RxDC') du microcontrôleur CAN classique modifié 31 est une combinaison (fonction de la seconde porte ET 42) du signal d'émission (TxDC') du microcontrôleur CAN classique modifié 31 et du signal de réception (RxDC) du microcontrôleur CAN complété 34. Du fait que « 1 » est l'état récessif du bus CAN, ceci permet de recevoir aussi bien des messages provenant du bus CAN que des messages émis par le microcontrôleur CAN classique modifié 31.

On présente maintenant, en relation avec l'organigramme de la **figure 5,** un mode de réalisation particulier du procédé selon l'invention de détection et configuration automatique de débit.

Il comprend les étapes suivantes :

(a) le dispositif passe dans le mode d'écoute (voir description ci-dessus) ;

(b) le dispositif obtient un triplet de transitions successives dans le signal transmis sur le réseau, c'est-à-dire le signal de réception RxDC du microcontrôleur CAN complété 34 (fig.4). Ce triplet de transitions délimite un premier et un second niveaux du signal, l'un de type dominant (signal à « 0 ») et l'autre de type récessif (signal à « 1 ») ;

(c) le dispositif mesure la durée, exprimée en nombre de période $T_H$ de l'horloge du dispositif, de chacun des premier et second niveaux du signal ;

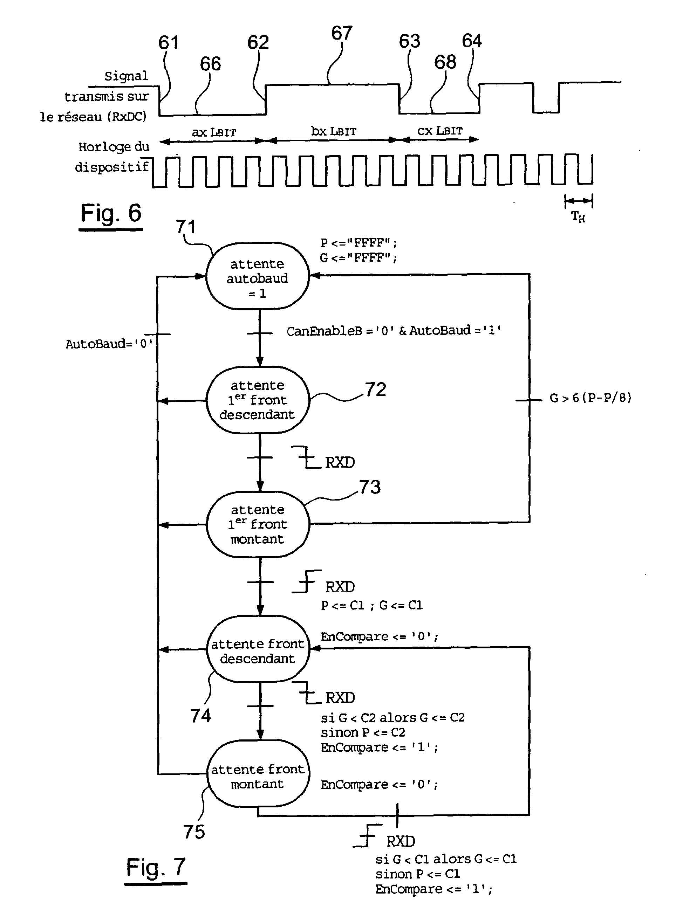

(d0) le dispositif met à jour deux registres d'historique, de façon telle que (cf. description de la figure 7 ci-après) :

- après la première itération de l'étape (d0), les registres contiennent respectivement le minimum P et le maximum G des durées des premier et second niveaux ;
- après chaque itération suivante de l'étape (d0), les registres sont mis à jour selon l'équation suivante : si G < X, alors G prend la valeur X, sinon P prend la valeur X, avec X la durée du nouveau niveau du signal (cf. étape (f3/g3) décrite ci-après) ;

(d1) en fonction du contenu P et G des deux registres d'historique, le dispositif obtient le nombre m de périodes $T_H$ d'horloge comprises dans la longueur de bit $L_{BIT}$ : $L_{BIT} = M * T_H$ ;

(d2) en fonction du nombre m obtenu à l'étape (d1), le dispositif obtient une valeur maximale $BRP_{MAX}$ du scalaire BRP (voir description ci-dessus) sachant que :

(i) $L_{BIT}=m * T_H = n * BRP * T_H$, d'où : $m = n * BRP$

(ii) $n = L_{BIT} / TQ$

(iii) $n \leq n_{MAX}$, avec $n_{MAX}$ (égal à 25) un nombre maximal prédéterminé d'unité de temps TQ que peut comprendre la longueur de bit $L_{BIT}$ ;

(d3) en fonction du nombre m et de la valeur maximale $BRP_{max}$ obtenus à l'étape (d2), le dispositif obtient une valeur du nombre n d'unités de temps TQ comprises dans la longueur de bit $L_{BIT}$ : $n = m / BRP_{MAX}$ ;

(d4) en fonction du nombre n obtenu à l'étape (d3), le dispositif obtient des valeurs pour la longueur $L_{SYNC}$ du segment de synchronisation, la longueur $L_{PRS}$ du segment de propagation et les longueurs $L_{PHS1}$ et $L_{PHS2}$ des premier et second segments de phase ;

(e) le dispositif valide la nouvelle configuration de débit ;

(f) si le dispositif détecte la bonne réception de la partie utile d'un message provenant du réseau (réponse positive à l'étape f1) (par exemple, par comparaison d'un champ CRC reçu et d'un champ CRC recalculé à partir de bits reçus), il passe temporairement dans le mode normal pour envoyer un champ d'acquittement (ACK) sur le réseau puis repasse dans le mode d'écoute (étape f2), sinon (réponse négative à l'étape f1) il obtient une transition suivante du signal, qui délimite avec la dernière transition précédente un nouveau niveau du signal, et il mesure la durée du nouveau niveau, exprimée en nombre de période $T_H$ de l'horloge du dispositif (étape (f3/g3)), puis il réitère les étapes (d0) à (g) en tenant compte du nouveau niveau du signal ;

(g) si le dispositif détecte la réception de façon correcte (Rx OK) d'un message provenant du réseau (réponse positive à l'étape g1), il passe dans le mode normal (étape g2), sinon (réponse négative à l'étape g1) il effectue l'étape référencée (f3/g3) détaillée ci-dessus, puis il réitère les étapes (d0) à (g) en tenant compte du nouveau niveau du signal.

Comme expliqué en détaillé par la suite, l'invention est basé sur un calcul de la longueur de bit $L_{BIT}$ (ou « TimeBit ») exploitant fortement un certain nombre de particularités du protocole CAN, à savoir :

-   un message d'erreur (Error Frame) ou un message de temporisation du réseau (Overload Frame) comporte au moins 6 bits dominants et au moins 6 bits récessifs ;

-   dans un message de données (Data Frame) ou un message de requête de données (Remote Frame), on ne peut pas trouver un niveau dominant, respectivement récessif, d'une durée supérieure à $5*L_{BIT}$ ;

-   un message de données (Data Frame) ou un message de requête de données (Remote Frame) ne peut pas comprendre que des niveaux d'une même durée ($1*L_{BIT}$, $2*L_{BIT}$, $3*L_{BIT}$, $4*L_{BIT}$ ou $5*L_{BIT}$) ;

-   un message de données (Data Frame) ou un message de requête de données (Remote Frame) ne peut pas comprendre uniquement des niveaux de durée $1*L_{BIT}$ et $2*L_{BIT}$.

On décrit maintenant plus en détail, en relation avec la **figure 6,** l'obtention de transitions dans le signal et la mesure de la durée des niveaux délimités par ces transitions, ces opérations étant mises en oeuvre dans certaines étapes ((b), (c) et (f3/g3)) apparaissant sur l'organigramme de la figure 5. Une première et une seconde transitions 61, 62 du signal de réception RxDC délimitent un premier niveau 66 (dominant dans l'exemple illustré). La seconde transition 62 et une troisième transition 63 du signal de réception RxDC délimitent un second niveau 67 (récessif dans l'exemple illustré). La troisième transition 63 et une quatrième transition 64 du signal de réception RxDC délimitent un troisième niveau 68 (dominant dans l'exemple illustré). Et ainsi de suite, avec alternance de niveaux dominants et récessifs.

Le signal de réception RxDC est échantillonné par l'horloge du dispositif, de période $T_H$. L'évaluation de la durée de chacun des niveaux dominants et récessifs se fait grâce à l'utilisation de deux compteurs. Le nombre d'échantillons dominants compris dans chaque niveau dominant est sauvé par un premier compteur, appelé compteur dominant C1. Le nombre d'échantillons récessifs compris dans chaque niveau récessif est sauvé par un second compteur, appelé compteur récessif C2. L'ordre de démarrage/arrêt des compteurs C1 et C2 est toujours donné par les transitions. Ainsi, une transition descendante (« faling edge » en anglais) (cas des première et troisième transitions référencées 61 et 63) démarre le compteur dominant C1 et arrête le compteur récessif C2. Une transition montante (« rising edge » en anglais) (cas des deuxième et quatrième transitions référencées 62 et 64) démarre le compteur récessif C2 et arrête le compteur dominant C1. Un compteur C1 ou C2 arrêté est remis à zéro une période d'horloge après son arrêt.

On sait par ailleurs que chacun des niveaux, dominant ou récessif, comprend un nombre entier de bits.

On peut en déduire les équations suivantes (C1 indique ici la valeur prise par le compteur dominant et C2 celle prise par le compteur récessif) :

$$C1 * T_H = a * L_{BIT} = a * (m * T_H) \quad -> \quad C1 = a * m$$

$$C2 * T_H = b * L_{BIT} = b * (m * T_H) \quad -> \quad C2 = b * m$$

On rappelle que m est le nombre de périodes d'horloge $T_H$ comprises dans la longueur d'un bit $L_{BIT}$.

Il y a donc trois inconnues dans ces deux équations : a, b et m. Toutefois, en utilisant les particularités du protocole CAN (voir ci-dessus), on sait que les paramètres a et b ne peuvent pas dépasser la valeur 5 dans le cas de messages de données (Data Frame) ou de messages de requête de données (Remote Frame).

Dans la première matrice 5x5 ci-dessous, on a représenté tous les cas possibles, en fonction de a et b, ainsi que la manière de déterminer m en fonction de C1 et C2.

| a\b | 1 | 2 | 3 | 4 | 5 |
|---|---|---|---|---|---|
| 1 | pas de conclusion | m = C1 / 2 | m = C1 | m = C1 | m = C1 |
| 2 | m = C2/2 | pas de conclusion | m = C2 - C1 | m = C1/2 | m = C2 - 2 C1 |
| 3 | m = C2 | m = C1 - C2 | pas de conclusion | m = C2 - C1 | m = 2 C1 - C2 |
| 4 | m = C2 | m = C2/2 | m = C1 - C2 | pas de conclusion | m = C2 - C1 |
| 5 | m = C2 | m = C1 - 2 C2 | m = 2 C2 - C1 | m = C1 - C2 | pas de conclusion |

Cette première matrice tient compte des particularités du protocole CAN :

- pour tous les couples de valeurs de a et b correspondant à la diagonale de la matrice (a = b), il est impossible de tirer une conclusion sur la valeur de m et on attend le niveau suivant. En effet, ceci n'est pas gênant puisqu'on effectue un traitement itératif et on sait que dans la suite du message reçu sur la ligne de réception RxDC, on est certain que lors d'au moins une itération avec un autre niveau, on va traiter un cas où a est différent de b, ce qui permettra de tirer une conclusion sur la valeur de m ;
- le cas a = 2b ou b = 2a est critique. En effet, on ne sait pas s'il s'agit de deux niveaux dont la durée est respectivement $1*L_{BIT}$ et $2*L_{BIT}$, ou bien $2*L_{BIT}$ et $4*L_{BIT}$. Volontairement, on fait la division par deux de la plus petite valeur entre C1 et C2. Ce choix est justifié par le fait qu'un message reçu sur la ligne de réception RxDC, on ne peut pas trouver que des niveaux de durée $1*L_{BIT}$ et $2*L_{BIT}$. Ultérieurement, lors d'au moins une itération avec un autre niveau, on va donc traiter un cas avec un niveau d'au moins $3*L_{BIT}$, permettant de trouver la valeur de m (c'est-à-dire la longueur d'un bit $L_{BIT}$).

La première matrice ci-dessus est complètement symétrique, on peut donc réduire de moitié les cas d'analyse en procédant à un ordonnancement des coefficients a et b. Ainsi, on note P = min (C1, C2) et G = max (C1, C2), P et G étant le contenu des deux registres d'historique déjà discutés ci-dessus (voir étape (d0) sur la figure 5). On obtient alors la seconde matrice suivante :

| min(a,b) \max (a,b) | 1 | 2 | 3 | 4 | 5 |
|---|---|---|---|---|---|
| 1 | pas de conclusion | m = P/2 | m = P | m = P | m = P |
| 2 | | pas de conclusion | m = G-P | m = P/2 | m = G - 2 P |
| 3 | | | pas de conclusion | m = G - P | m = 2 P - G |

(suite)

| min(a,b) \max (a,b) | 1 | 2 | 3 | 4 | 5 |
|---|---|---|---|---|---|
| 4 | | | | pas de conclusion | m = G - P |
| 5 | | | | | pas de conclusion |

Au cours de l'étape (d1), la valeur du nombre m est donnée par les équations suivantes, découlant de la seconde matrice ci-dessus :

- m = min (2P-G, G-P), si P < G < 2P       (1)
- m = min (G-2P, P), si 2P < G < 6P       (2)
- m = P/2, si G = 2P       (3)
- m n'est pas calculé dans les autres cas       (4)

En pratique, la tolérance de l'oscillateur qui génère l'horloge du dispositif peut avoir une conséquence néfaste sur l'algorithme de décision de la valeur de m selon les équations (1) à (4) ci-dessus. En effet, si G est proche de 2P, il y a un risque majeur d'utiliser une mauvaise équation pour le calcul de m. Pour cette raison, on prend en compte une tolérance de l'oscillateur qui ne dépasse pas la valeur de P/k, avec k un nombre entier prédéterminé supérieur ou égal à 4, et préférentiellement égal à 8. Ainsi, on accepte une tolérance qui est beaucoup plus grande que celle spécifiée dans le protocole CAN.

Les équations (1) à (4) ci-dessus sont donc remplacées par les équations suivantes :

- m = min (2P-G, G-P), si P + P/8 < G ≤ 2(P - P/8)       (1')
- m = min (G-2P, P), si 2(P + P/8) < G < 6(P - P/8)       (2')
- m = P/2, si 2(P - P/8) < G ≤ 2(P + P/8)       (3')
- m n'est pas calculé dans les autres cas       (4')

On présente désormais, en relation avec la **figure 7**, un algorithme de mise en oeuvre de l'étape (d0) de mise à jour de deux registres d'historique contenant les nombres P et G précités. On rappelle que ces nombres P et G sont utilisés dans l'étape (d1) d'obtention du nombre m (fig.5).

Au départ (étape 71), on attend que le signal de sélection de mode devienne actif (Autobaud = 1). Les nombres P et G prennent la valeur FFFF par défaut.

Si le dispositif est activé (passage à « 0 » d'un signal CanEnableB) et si le signal de sélection de mode devient actif (Autobaud = 1), on passe à l'étape 72 dans laquelle on attend le premier front descendant (première transition) du signal reçu RxDC.

Si le premier front descendant a été détecté, on passe à l'étape 73 dans laquelle on attend le premier front montant (deuxième transition) du signal reçu RxDC.

Si une condition indiquant un message d'erreur (Error Frame) ou un message de temporisation du réseau (Overload frame) est détectée (G > 6(P-P/8)), on revient à l'étape 71.

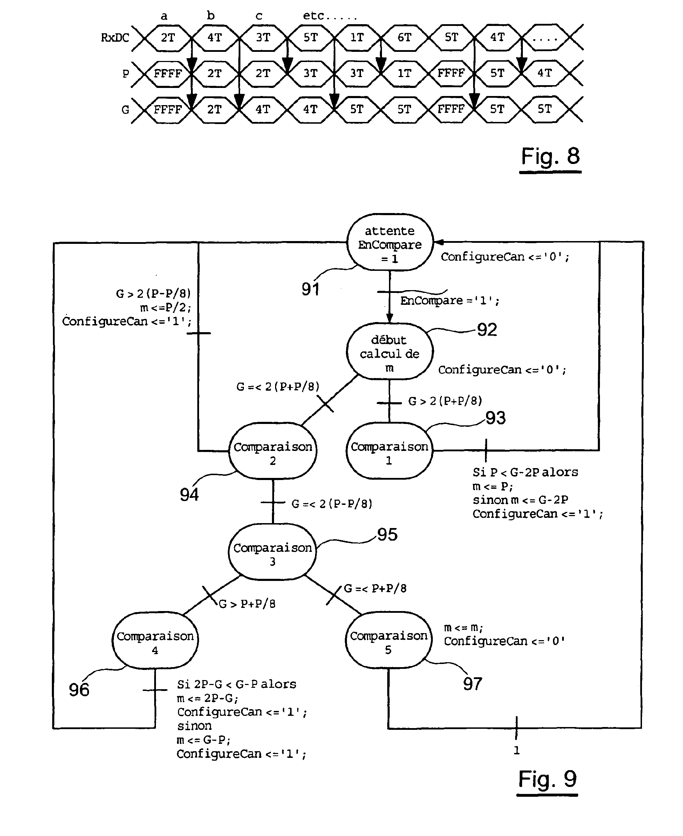

Si le premier front montant a été détecté, on donne à P et à G la valeur C1 du compteur dominant. Puis, on passe à l'étape 74 dans laquelle on attend le front descendant suivant (troisième transition) du signal reçu RxDC et dans laquelle on désactive (en la mettant à « 0 ») une variable « EnCompare » déclenchant le calcul du nombre m (voir algorithme décrit ci-après en relation avec la figure 9).

Si le front descendant suivant a été détecté, on donne à G la valeur C2 du compteur récessif si C2 est supérieur à G, sinon on donne à P la valeur C2. En outre, on active (en la mettant à 1) la variable « EnCompare » déclenchant le calcul du nombre m. Puis, on passe à l'étape 75 dans laquelle on attend le front montant suivant (quatrième transition) du signal reçu RxDC et dans laquelle on désactive (en la mettant à « 0 ») la variable « EnCompare » déclenchant le calcul du nombre m.

Si le front montant suivant a été détecté, on donne à G la valeur C1 du compteur dominant si C1 est supérieur à G, sinon on donne à P la valeur C1. En outre, on active (en la mettant à 1) la variable « EnCompare » déclenchant le calcul du nombre m. Puis, on revient à l'étape 74 dans laquelle on attend le front descendant suivant (cinquième transition) du signal reçu RxDC et dans laquelle on désactive (en la mettant à « 0 ») la variable « EnCompare » déclenchant le calcul du nombre m.

Au fur et à mesure des transitions successives, on effectue en boucle les étapes 74 et 75 précitées, et donc on recalcule les valeurs de P et G, tant que le signal de sélection de mode ne devient pas inactif (Autobaud = 0) (voir étape (g), fig.5).

La **figure 8** illustre un exemple de signal reçu RxDC (signal transmis sur le réseau), avec ses transitions, et les valeurs des nombres P et G obtenues en exécutant l'algorithme de la figure 7, décrit en détail ci-dessus.

On présente maintenant, en relation avec la **figure 9**, un algorithme de mise en oeuvre de l'étape (d1) d'obtention du nombre m (fig.5) à partir des équations (1') à (4') expliquées ci-dessus.

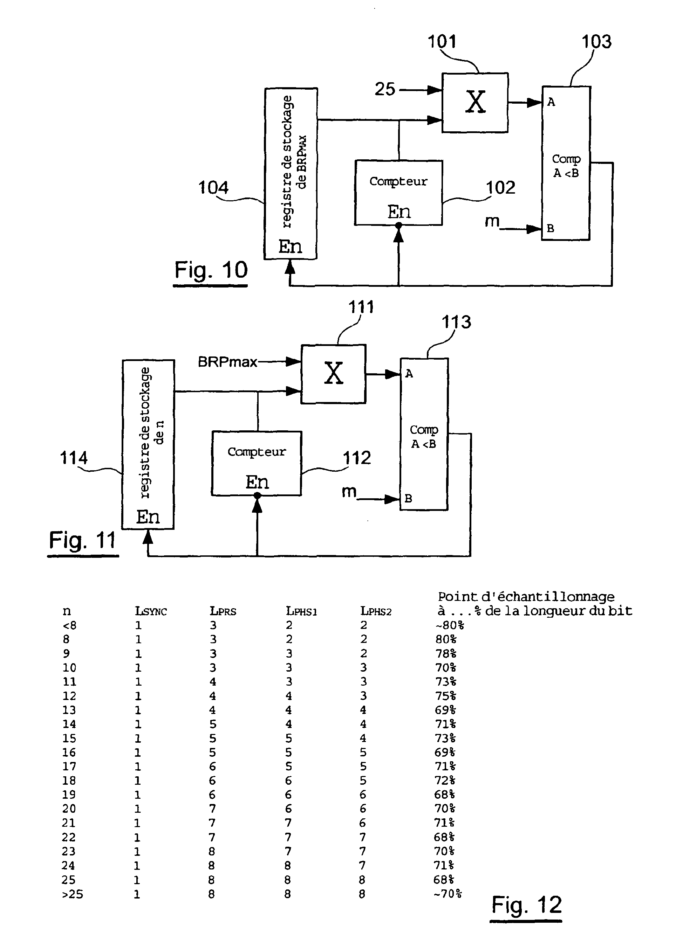

Au départ (étape 91), on attend l'activation (par mise à 1) de la variable « EnCompare » déclenchant le calcul du nombre m (voir algorithme décrit ci-dessus en relation avec la figure 7). Par ailleurs, dans cette étape initiale 91, on désactive (en la mettant à « 0 ») une variable « ConfigureCan » déclenchant le calcul du scalaire BRP (voir algorithme décrit ci-après en relation avec la figure 10).

Si la variable « EnCompare » est activée (EnCompare = 1), on passe à l'étape 92 de lancement du calcul du nombre m. La variable « ConfigureCan » reste désactivée.

Si la condition « G > 2(P+P/8) » est vérifiée, on passe à l'étape 93 correspondant à un premier état intermédiaire (comparaison 1). On est alors dans la situation où l'équation (2') précitée s'applique. Par conséquent, m = min (G-2P, P). En outre, on active (en la mettant à 1) la variable « ConfigureCan » déclenchant le calcul du scalaire BRP. Puis, on revient à l'étape initiale 91.

Si la condition « G ≤ 2(P+P/8) » est vérifiée, on passe à l'étape 94 correspondant à un deuxième état intermédiaire (comparaison 2). Il convient d'effectuer d'autres comparaisons afin de déterminer laquelle des équations (1'), (3') et (4') précitées s'applique.

Si la condition « G > 2(P-P/8) » est vérifiée, on est alors dans la situation où l'équation (3') précitée s'applique. Par conséquent, m = P/2. En outre, on active (en la mettant à 1) la variable « ConfigureCan » déclenchant le calcul du scalaire BRP. Puis, on revient à l'étape initiale 91.

Si la condition « G ≤ 2(P-P/8) » est vérifiée, on passe à l'étape 95 correspondant à un troisième état intermédiaire (comparaison 3). Il convient d'effectuer d'autres comparaisons afin de déterminer laquelle des équations (1') et (4') précitées s'applique.

Si la condition « G > P+P/8 » est vérifiée, on passe à l'étape 96 correspondant à un quatrième état intermédiaire (comparaison 4). On est alors dans la situation où l'équation (1') précitée s'applique. Par conséquent, m = min (2P-G, G-P). En outre, on active (en la mettant à 1) la variable « ConfigureCan » déclenchant le calcul du scalaire BRP. Puis, on revient à l'étape initiale 91.

Si la condition « G ≤ P+P/8 » est vérifiée, on passe à l'étape 97 correspondant à un cinquième état intermédiaire (comparaison 5). On est alors dans la situation où l'équation (4') précitée s'applique. Par conséquent, m n'est pas recalculé (m = m). En outre, la variable « ConfigureCan » reste désactivée. Puis, on revient à l'étape initiale 91.

On présente maintenant, en relation avec la **figure 10,** un schéma bloc d'un exemple de circuit mettant en oeuvre l'étape (d2) d'obtention de la valeur maximale $BRP_{MAX}$ du scalaire BRP (fig.5). Ce circuit est activé quand la variable « ConfigureCan » est activée (ConfigureCan = 1) (voir algorithme décrit ci-dessus en relation avec la figure 9).

On sait que : m = n * BRP et n ≤ 25.

Le circuit comprend un multiplieur 101, un compteur 102, un comparateur 103 et un registre de stockage 104. Le multiplieur 101 reçoit sur ses deux entrées le nombre 25 (c'est-à-dire $n_{MAX}$) et la sortie du compteur 102. Le comparateur 103 reçoit sur sa première entrée (A) la sortie du multiplieur 101 et sur sa deuxième entrée (B) le nombre m préalablement calculé (par l'exécution de l'algorithme décrit ci-dessus en relation avec la figure 9). La sortie du comparateur est à « 0 » si sa première entrée est inférieure à sa seconde entrée (A < B) et à « 1 » sinon (A ≥ B). Le registre de stockage 104 est relié à la sortie du compteur 102. Le compteur 102 est commandé par une valeur « 0 » de la sortie du comparateur 103, tandis que le registre de stockage 104 est commandé par une valeur « 1 » de cette même sortie du comparateur 103.

Le fonctionnement de ce circuit est le suivant : le compteur commence à s'incrémenter à partir de 0. Tant que la condition « 25 x compteur < m » est vérifiée (A < B) , alors la sortie du comparateur 103 s'incrémente de 1. Dès que la condition « 25 x compteur ≥ m » est vérifiée (A ≥ B), alors la valeur courante du compteur est transférée dans le registre de stockage 104. Cette valeur est la valeur maximale $BRP_{MAX}$ du scalaire BRP.

On présente maintenant, en relation avec la **figure 11**, un schéma bloc d'un exemple de circuit mettant en oeuvre l'étape (d3) d'obtention du nombre n (fig.5). Ce circuit est activé quand la valeur maximale $BRP_{MAX}$ du scalaire BRP a été obtenue (voir algorithme et circuit décrits ci-dessus en relation avec la figure 10).

On sait que : m = n * BRP et 8 ≤ n ≤ 25. En outre, on a obtenu la valeur maximale $BRP_{MAX}$ du scalaire BRP.

Le circuit de la figure Il est très proche de celui de la figure 10. Il comprend un multiplieur 111, un compteur 112, un comparateur 113 et un registre de stockage 114. Le multiplieur 111 reçoit sur ses deux entrées le nombre $BRP_{MAX}$ et la sortie du compteur 112. Le comparateur 113 reçoit sur sa première entrée (A) la sortie du multiplieur 111 et sur sa deuxième entrée (B) le nombre m préalablement calculé (par l'exécution de l'algorithme décrit ci-dessus en relation avec la figure 9). La sortie du comparateur est à « 0 » si sa première entrée est inférieure à sa seconde entrée (A < B) et à « 1 » sinon (A ≥ B). Le registre de stockage 114 est relié à la sortie du compteur 112. Le compteur 112 est commandé par une valeur « 0 » de la sortie du comparateur 113, tandis que le registre de stockage 114 est commandé par une valeur « 1 » de cette même sortie du comparateur 113.

Le fonctionnement de ce circuit est le suivant : le compteur commence à s'incrémenter à partir de 7 (car n ne peut pas être inférieur à 8). Tant que la condition « $BRP_{MAX}$ x compteur < m » est vérifiée (A < B) , alors la sortie du comparateur 113 s'incrémente de 1. Dès que la condition « $BRP_{MAX}$ x compteur ≥ m » est vérifiée (A ≥ B), alors la valeur courante du compteur est transférée dans le registre de stockage 114. Cette valeur est la valeur du nombre n.

La **figure 12** illustre un exemple de table de correspondance utilisée au cours de l'étape (d4) (fig.5) d'obtention, en fonction du nombre n obtenu à l'étape (d3), de valeurs (exprimées en nombre d'unité de temps TQ) pour la longueur $L_{SYNC}$ du segment de synchronisation, la longueur $L_{PRS}$ du segment de propagation et les longueurs $L_{PHS1}$ et $L_{PHS2}$ des premier et second segments de phase.

Pour chaque valeur du nombre n, les valeurs des longueurs des segments constituant le bit sont calculées à partir de l'équation suivante :

$$n = L_{SYNC} + L_{PRS} + L_{PHS1} + L_{PHS2}$$

Les valeurs sont choisies pour avoir un point d'échantillonnage autour de 75%. Il est clair que d'autres tables de correspondance peuvent être envisagées sans sortir du cadre de la présente invention.

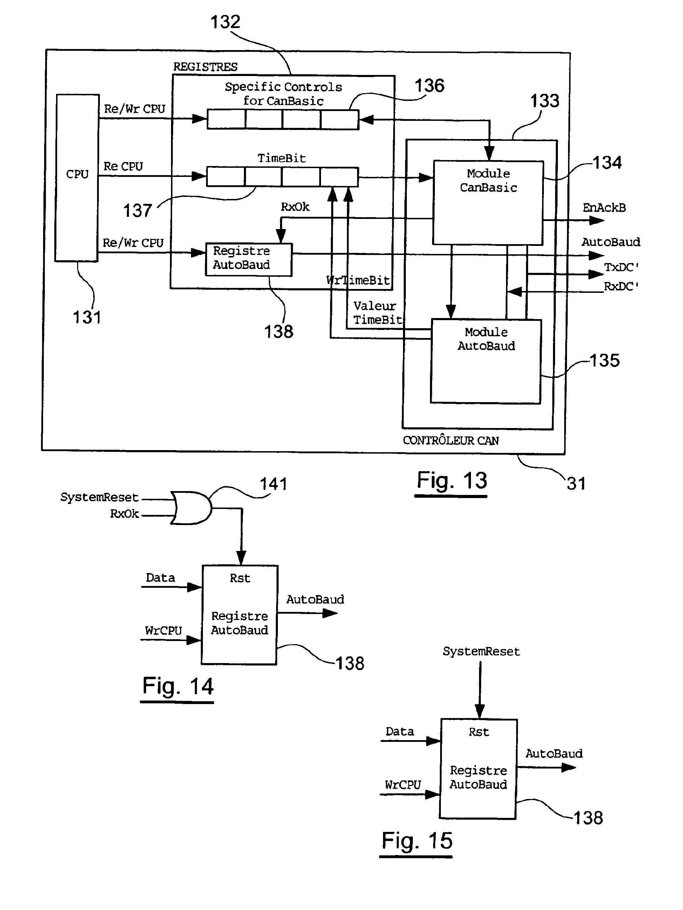

On présente maintenant, en relation avec la **figure 13,** un mode de réalisation particulier du microcontrôleur CAN classique modifié selon l'invention, référencé 31 sur la figure 3.

Le microcontrôleur CAN classique modifié 31 comprend une CPU (unité centrale de traitement) 131, communiquant avec un contrôleur CAN 133 par l'intermédiaire d'un ensemble de registres 132.

L'application exécutée par la CPU 131peut écrire dans certains registres (registres de configuration, registre définissant la structure d'un bit (TimeBit) 137, registre pour le signal de sélection de mode (Autobaud) 138, etc.).

Le contrôleur CAN peut également écrire dans certains registres, appelés registres d'état (Status). Ces registres d'état informent l'application exécutée par la CPU de l'état d'un message (trame) reçu. Un message correctement reçu se traduit par l'écriture d'un bit RxOK. Un message erroné se traduit par l'écriture d'un bit qui décrit le type d'erreur (erreur de bourrage SERR, erreur de bit BERR, erreur d'acquittement AERR, ...).

Dans le mode de réalisation particulier de l'invention illustré par la figure 13, le contrôleur CAN 133 comprend un module classique (appelé ci-après module CanBasic) 134, de codage/décodage du signal reçu du bus CAN, et un module 135 (appelé ci-après module Autobaud) spécifique à la présente invention et mettant en oeuvre les algorithmes décrits ci-dessus. En d'autres termes, dans ce mode de réalisation particulier, le procédé selon l'invention de détection et configuration automatique de débit est mis en oeuvre de façon matérielle (hardware).

Il est clair cependant que d'autres modes de réalisation de l'invention peuvent être envisagés, dans lesquels une partie ou la totalité de l'invention peut être mise en oeuvre de façon logicielle (software), par l'application exécutée par la CPU 131.

Les registres de contrôle 136 spécifiques au module CanBasic 134 ne sont pas décrits ici car ils ne font pas l'objet de la présente invention.

Le registre définissant la structure d'un bit (appelé ci-après registre TimeBit) 137 est absolument nécessaire pour pouvoir communiquer sur le bus CAN. En effet, c'est lui qui sauve la configuration d'un bit, c'est-à-dire les valeurs de la longueur $L_{SYNC}$ du segment de synchronisation, la longueur $L_{PRS}$ du segment de propagation et les longueurs $L_{PHS1}$ et $L_{PHS2}$ des premier et second segments de phase. Dans le cas d'une solution matérielle (hardware) où c'est le module Autobaud 135 (spécifique à la présente invention) qui permet d'obtenir ces valeurs, l'application exécutée par la CPU 131 n'a que le droit de lire le contenu du registre TimeBit 137. Le module Autobaud 135 envoie des signaux de contrôle pour écrire dans le registre TimeBit 137. Ainsi, quand une configuration de bit est trouvée, le signal WrTimeBit est généré de façon que les valeurs des longueurs $L_{SYNC}$, $L_{PRS}$, $L_{PHS1}$ et $L_{PHS2}$ soient écrites dans le registre TimeBit 137. Le module CanBasic 134 utilisera ces valeurs pour communiquer sur le bus CAN et si ces valeurs sont bonnes, le module CanBasic 134 générera le drapeau d'état (status flag) RxOK pour confirmer que la réception du message s'est bien passée.

Un registre (appelé ci-après registre Autobaud) 138 est nécessaire pour le signal de sélection de mode (Autobaud). Au départ, l'application exécutée par la CPU 131 doit écrire « 1 » dans ce registre (génération d'un signal de contrôle WrCPU et d'un signal de données DATA égal à « 1 », cf. fig.14), pour démarrer le module Autobaud 135 et donc les différents algorithmes spécifiques à l'invention (voir description ci-dessus). Ensuite, dans le cas de la solution matérielle (hardware) précitée, l'application n'agit plus sur le registre Autobaud 138 et le module Autobaud 135 qui prend en charge sa gestion. Plus précisément, quand le module Autobaud 135 trouve une configuration de débit (écriture des valeurs des longueurs $L_{SYNC}$, $L_{PRS}$, $L_{PHS1}$ et $L_{PHS2}$ dans le registre TimeBit 137), le module CanBasic 134 prend en compte cette configuration et décode le signal reçu RxDC'. Le module CanBasic 134 génère le drapeau d'état (status flag) RxOK, quand un message a été correctement reçu.

Comme détaillé sur la **figure 14,** ce drapeau d'état RxOK remet à « 0 » (reset) le registre Autobaud 138, ce qui provoque l'arrêt instantané du module Autobaud 135 et le retour à un fonctionnement du dispositif en mode normal (Autobaud = 0).

On notera que le registre Autobaud 138 peut également être remis à « 0 » par un drapeau d'état « SystemReset » indiquant un démarrage du dispositif. On attaque donc la borne de remise à « 0 » (Rst) du registre Autobaud 138 avec le signal de sortie d'une porte OU 141 dont les entrées reçoivent le drapeau d'état RxOK et le drapeau d'état SystemReset. Dans un seul souci de simplification, le drapeau d'état SystemReset n'a pas été représenté sur la figure 13.

La **figure 15** illustre une variante de réalisation du changement de valeur du registre Autobaud 138, dans le cas où une partie ou la totalité de l'invention est mise en oeuvre de façon logicielle (software), par l'application exécutée par la CPU 131.

Dans ce cas, quand l'application exécutée par la CPU 131 est informée de la génération du drapeau d'état RxOK, elle écrit « 1 » dans le registre Autobaud 138. Pour ce faire, elle génère un signal de contrôle WrCPU et un signal de données DATA égal à « 1 ».

Ainsi, seul le drapeau d'état « SystemReset » précité permet la remise à « 0 » du registre Autobaud 138.

On présente maintenant, en relation avec la vue dynamique de la **figure 16,** le fonctionnement du procédé selon l'invention.

Pendant la réception d'un premier message (première trame) 161, le dispositif obtient et valide une nouvelle configuration de débit (détermination des valeurs pour les paramètres définissant la longueur de bit $L_{BIT}$).

Pendant la réception d'un second message (seconde trame) 162, le dispositif confirme que la nouvelle configuration de débit est correcte. Le module CanBasic 134 (fig.13) calcule une valeur du champ de vérification CRC (selon des règles connues de l'homme du métier) et la compare avec la valeur du champ CRC reçu par le dispositif. En cas d'égalité, il active le signal de désactivation temporaire EnAckB (en le mettant à « 0 »), de façon que le dispositif envoie un champ d'acquittement (ACK) du second message 162. Puis, si le signal du bus reste à l'état récessif (« 1 ») pendant 7 bits (7 * $L_{BIT}$), le module CanBasic 134 génère le drapeau d'état RxOK, ce qui va provoquer l'inactivation du signal de sélection de mode Autobaud (passage à « 0 »), c'est-à-dire la fin de l'exécution du procédé selon l'invention.

Il est important de noter que l'exécution du procédé selon l'invention (passage à « 1 » du signal de sélection de mode Autobaud) peut démarrer à n'importe quel moment de la réception du premier message 161 ou bien pendant la réception d'un message 160 précédant le premier message 161.

Si l'exécution du procédé selon l'invention démarre pendant la réception du premier message 161, et si une nouvelle configuration de débit peut effectivement être obtenue, alors le temps total d'exécution est inférieur à la durée de deux messages (somme de la durée restante du premier message 161 et de la durée totale du second message 162).

Au pire des cas, si l'exécution du procédé selon l'invention démarre pendant la réception du message 160 précédant le premier message 161 (mais qu'une nouvelle configuration de débit ne peut pas être obtenue pendant la réception de ce message précédent 160), alors le temps total d'exécution est égal au maximum à la durée de trois messages (somme de la durée du message précédent 160, du premier message 161 et du second message 162).

**Revendications**

1. Procédé de détection automatique du débit d'un réseau et de configuration au débit détecté par un dispositif connecté au réseau, le réseau transmettant un signal sur lequel sont véhiculés des messages comprenant des bits de longueur $L_{BIT}$ et de type dominant ou récessif, **caractérisé en ce qu**'il comprend les étapes successives suivantes :

   (a) le dispositif passe dans un mode d'écoute, dans lequel il peut recevoir des messages provenant du réseau mais ne peut pas émettre de messages sur le réseau ;
   (b) le dispositif obtient un triplet de transitions successives dans le signal transmis sur le réseau, ledit triplet délimitant un premier et un second niveaux du signal, l'un dominant et l'autre récessif ;
   (c) le dispositif mesure la durée, exprimée en nombre de période $T_H$ d'une horloge du dispositif, de chacun des premier et second niveaux ;
   (d) en fonction des durées mesurées des niveaux du signal, le dispositif obtient une nouvelle configuration de débit en déterminant des valeurs pour des paramètres définissant la longueur de bit $L_{BIT}$ ;
   (e) le dispositif valide la nouvelle configuration de débit ;
   (g) si le dispositif détecte qu'au moins une condition d'adaptation de débit est vérifiée, il passe dans un mode normal, sinon il obtient une transition suivante du signal, qui délimite avec la dernière transition précédente un nouveau niveau du signal, il mesure la durée du nouveau niveau, exprimée en nombre de période $T_H$ de l'horloge du dispositif, et il réitère les étapes (d) à (g) en tenant compte du nouveau niveau du signal.

**2.** Procédé selon la revendication 1, **caractérisé en ce que** le réseau est un bus CAN, et **en ce que** le dispositif comprend un microcontrôleur CAN complété par rapport à un microcontrôleur CAN classique de façon à mettre en oeuvre le procédé selon l'invention de détection automatique du débit du réseau et de configuration au débit détecté.

**3.** Procédé selon la revendication 2, la longueur de bit $L_{BIT}$ étant définie par :

- un scalaire BRP, tel que : $TQ = BRP * T_H$, avec TQ une unité de temps et $T_H$ la période de l'horloge du dispositif ;
- des longueurs exprimées en nombre d'unité de temps TQ : longueur $L_{SYNC}$ d'un segment de synchronisation, longueur $L_{PRS}$ d'un segment de propagation visant à compenser un délai physique sur le bus CAN, longueurs $L_{PHS1}$ et $L_{PHS2}$ de premier et second segments de phase permettant de positionner un point d'échantillonnage,

**caractérisé en ce que** l'étape (d) comprend elle-même les étapes suivantes :

(d0) le dispositif met à jour deux registres d'historique, de façon telle que :

- après la première itération de l'étape (d), les registres contiennent respectivement le minimum P et le maximum G des durées des premier et second niveaux ;
- après chaque itération suivante de l'étape (d), les registres sont mis à jour selon l'équation suivante : si G < X, alors G prend la valeur X, sinon P prend la valeur X, avec X la durée dudit nouveau niveau du signal ;

(d1) en fonction du contenu P et G desdits registres d'historique, le dispositif obtient un nombre m permettant d'exprimer la longueur de bit $L_{BIT}$ en fonction de la période $T_H$ de l'horloge du dispositif : $L_{BIT} = m * T_H$ ;

(d2) en fonction du nombre m préalablement obtenu, le dispositif obtient une valeur maximale $BRP_{MAX}$ du scalaire BRP sachant que :

(i)

$$L_{BIT} = m * T_H = n * BRP * T_H, \text{ d'où : } m = n * BRP$$

(ii)

$$n = L_{BIT} / TQ$$

(iii) $n \leq n_{MAX}$, avec $n_{MAX}$ un nombre maximal prédéterminé d'unité de temps TQ que peut comprendre la longueur de bit $L_{BIT}$ ;

(d3) en fonction du nombre m et de la valeur maximale $BRP_{max}$ préalablement obtenus, le dispositif obtient une valeur du nombre n telle que : $n = m / BRP_{MAX}$ ;

(d4) en fonction du nombre n préalablement obtenu, le dispositif obtient des valeurs pour la longueur $L_{SYNC}$ du segment de synchronisation, la longueur $L_{PRS}$ du segment de propagation et les longueurs $L_{PHS1}$ et $L_{PHS2}$ des premier et second segments de phase.

**4.** Procédé selon la revendication 3, **caractérisé en ce que**, dans l'étape (d1), la valeur du nombre m est donnée par les équations suivantes :

- m = min (2P-G, G-P), si P < G < 2P,
- m = min (G-2P, P), si 2P < G < 6P,
- m = P/2, si G = 2P,
- m n'est pas calculé dans les autres cas.

**5.** Procédé selon la revendication 4, **caractérisé en ce que**, dans l'étape (d1), les conditions d'application des équations donnant la valeur du nombre m sont modifiées comme suit :

- m = min (2P-G, G-P), si P + P/k < G ≤ 2(P - P/k),
- m = min (G-2P, P), si 2(P + P/k) < G < 6(P - P/k),
- m = P/2, si 2(P - P/k) < G ≤ 2(P + P/k),
- m n'est pas calculé dans les autres cas,

avec k un nombre entier prédéterminé supérieur ou égal à 4, et préférentiellement égal à 8.

6. Procédé selon l'une quelconque des revendications 3 à 5, **caractérisé en ce que**, dans l'étape (d4), on utilise une table de correspondance prédéterminée, associant à chaque valeur du nombre n un jeu de valeurs pour la longueur $L_{SYNC}$ du segment de synchronisation, la longueur $L_{PRS}$ du segment de propagation et les longueurs $L_{PHS1}$ et $L_{PHS2}$ des premier et second segments de phase.

7. Procédé selon l'une quelconque des revendications 1 à 6, **caractérisé en ce que** ladite au moins une condition d'adaptation de débit de l'étape (g) est la réception de façon correcte (Rx OK) d'un message provenant du réseau.

8. Procédé selon l'une quelconque des revendications 1 à 7, **caractérisé en ce que** l'étape (g) est précédée de l'étape suivante : (f) si le dispositif détecte la bonne réception de la partie utile d'un message provenant du réseau, il passe temporairement dans le mode normal pour envoyer un champ d'acquittement (ACK) sur le réseau puis repasse dans le mode d'écoute, sinon il obtient une transition suivante du signal, qui délimite avec la dernière transition précédente un nouveau niveau du signal, il mesure la durée du nouveau niveau, exprimée en nombre de période $T_H$ de l'horloge du dispositif, et il réitère les étapes (d) à (g) en tenant compte du nouveau niveau du signal.

9. Dispositif destiné à être connecté à un réseau, **caractérisé en ce qu'**il comprend des moyens de détection automatique du débit du réseau et de configuration au débit détecté, le réseau transmettant un signal sur lequel sont véhiculés des messages comprenant des bits de longueur $L_{BIT}$ et de type dominant ou récessif, **caractérisé en ce qu'**il comprend :

   - des moyens de basculement d'un mode normal à un mode d'écoute, dans lequel sont activés des moyens de blocage de messages émis par le dispositif vers le réseau, le dispositif continuant à recevoir des messages provenant du réseau ;
   - des moyens d'obtention d'un triplet de transitions successives dans le signal transmis sur le réseau, ledit triplet délimitant un premier et un second niveaux du signal, l'un dominant et l'autre récessif ;
   - des moyens de mesure de la durée, exprimée en nombre de période $T_H$ d'une horloge du dispositif, de chacun des premier et second niveaux du signal;
   - des moyens d'obtention, en fonction des durée mesure d'une nouvelle configuration de débit par détermination de valeurs pour des paramètres définissant la longueur de bit $L_{BIT}$;
   - des moyens de validation de la nouvelle configuration de débit;
   - des moyens de détection qu'au moins une condition d'adaptation de débit est vérifiée ;
   - des moyens de basculement du mode d'écoute au mode normal, activés en cas de détection positive par les moyens de détection ;
   - des moyens d'obtention d'une transition suivante du signal, qui délimite avec la dernière transition précédente un nouveau niveau du signal, et des moyens de mesure de la durée du nouveau niveau, exprimée en nombre de période $T_H$ de l'horloge du dispositif, activés avec lesdits moyens d'obtention et de validation d'une nouvelle configuration de débit et lesdits moyens de détection qu'au moins une condition d'adaptation de débit est vérifiée, en cas de détection négative par les moyens de détection, de façon à tenir compte dudit nouveau niveau du signal.

10. Dispositif selon la revendication 9, **caractérisé en ce que** le réseau est un bus CAN, et **en ce que** le dispositif comprend un microcontrôleur CAN complété par rapport à un microcontrôleur CAN classique et comprenant lui-même lesdits moyens de détection automatique du débit du réseau et de configuration au débit détecté.

11. Dispositif selon la revendication 10, **caractérisé en ce que** les moyens de basculement du mode normal au mode d'écoute comprennent des moyens de génération d'un signal de sélection de mode (Autobaud), prenant la valeur « 0 » ou « 1 » selon que le dispositif doit fonctionner dans le mode normal ou d'écoute respectivement, **en ce que** le microcontrôleur CAN complété comprend un microcontrôleur CAN classique modifié pour comprendre lui-même lesdits moyens de détection automatique du débit du réseau et de configuration au débit détecté, hormis lesdits moyens de blocage de messages émis, et **en ce que** les moyens de blocage de messages émis comprennent des moyens de réalisation de la fonction logique « OU » entre le signal de sélection de mode et le signal d'émission (TxDC') du microcontrôleur CAN classique modifié, le signal de sortie des moyens de réalisation de la fonction logique « OU » constituant le signal d'émission (TxDC) du microcontrôleur CAN complété.

**12.** Dispositif selon la revendication 11, **caractérisé en ce que** le microcontrôleur CAN complété comprend en outre des moyens de rebouclage de la sortie sur l'entrée du microcontrôleur CAN classique modifié, comprenant :

- des moyens de réalisation de la fonction logique « ET » entre le signal d'émission (TxDC') du microcontrôleur CAN classique modifié et le signal de réception (RxDC) du microcontrôleur CAN complété ;
- des moyens de multiplexage recevant sur une première entrée le signal de sortie des moyens de réalisation de la fonction logique « ET » et sur une deuxième entrée le signal de réception (RxDC) du microcontrôleur CAN complété, le signal de sortie des moyens de multiplexage constituant le signal de réception (RxDC') du microcontrôleur CAN classique modifié, les moyens de multiplexage étant commandés par le signal de sélection de mode de façon que la première ou la seconde entrée soit sélectionnée selon que le signal de sélection de mode prend la valeur « 1 » ou « 0 » respectivement.

**13.** Dispositif selon l'une quelconque des revendications 9 à 12, **caractérisé en ce que** le microcontrôleur CAN complété comprend en outre des moyens de basculement temporaire du mode d'écoute au mode normal, de façon à envoyer un champ d'acquittement (ACK) sur le réseau.

**14.** Dispositif selon la revendication 13 et l'une quelconque des revendications 11 et 12, **caractérisé en ce que** les moyens de basculement temporaire du mode d'écoute au mode normal comprennent des moyens de génération d'un signal (EnAckB) de désactivation temporaire du signal de sélection de mode, prenant la valeur « 0 » ou « 1 » selon que le signal de sélection de mode (Autobaud) doit être désactivé temporairement ou non.

**Claims**

**1.** Process for automatically detecting the throughput of a network and for configuring with the detected throughput via a device connected to the network, the network transmitting a signal on which messages are carried that include bits of length $L_{BIT}$ and of a dominant or recessive type, **characterised in that** it includes the following successive steps;

a) the device goes into a listen mode, in which it is able to receive messages coming from the network but is unable to send messages on the network;
b) the device obtains a triplet of successive transitions in the signal transmitted on the network, said triplet delimiting a first and second signal level, one dominant and the other recessive;
c) the device measures the duration, expressed as a period $T_H$ number of a clock of the device, of each of the first and second levels;
d) as a function of the measured lengths of the signal levels, the device obtains a new throughput configuration by determining values for parameters that define the bit length $L_{BIT}$;
e) the device validates the new throughput configuration;
g) if the device detects that at least one throughput adaptation condition is verified, it goes into a normal mode, otherwise it obtains a next transition of the signal, which delimits with the last previous transition a new level of the signal, it measures the duration of the new level, expressed as a period $T_H$ number of the device clock, and it reiterates steps (d) to (g) taking account of the new signal level.

**2.** Process according to claim 1, **characterised in that** the network is a CAN bus, and **in that** the device includes a CAN microcontroller completed relative to a conventional CAN microcontroller so as to implement the process according to the invention for automatically detecting the throughput of the network and for configuring with the detected throughput.

**3.** Process according to claim 2, the bit length $L_{BIT}$ being defined by:

- a scalar BRP, such that: $TQ = BRP * T_H$ with TQ a unit of time and $T_H$ the period of the device clock;
- lengths expressed as a number of time units TQ: length $L_{SYNC}$ of a synchronisation segment, length $L_{PRS}$ of a propagation segment for the purpose of compensating for a physical delay on the CAN bus, lengths $L_{PHS1}$ and $L_{PHS2}$ of first and second phase segments allowing a sample point to be positioned,

**characterised in that** the step (d) itself includes the following steps:

(d0) the device updates two log registers, in such a way that:

- after the first iteration of step (d), the registers contain the minimum P and the maximum G respectively of the durations of the first and second levels;
- after each successive iteration of step (d), the registers are updated according to the following equation: if G < X, then G assumes the value X, otherwise P assumes the value X, with X the duration of the new signal level;

d(1) as a function of the content P and G of said log registers, the device obtains a number m allowing the bit length $L_{BIT}$ to be expressed as a function of the period $T_H$ of the device clock: $L_{BIT} = m * T_H$;

(d2) as a function of the previously obtained number m, the device obtains a maximum value $BRP_{MAX}$ of the scalar BRP knowing that:

i)

$$L_{BIT} = m * T_H = n * BRP * T_H, \text{ hence } : m = n * BRP$$

ii)

$$n = L_{BIT} / TQ$$

iii) $n \leq n_{MAX}$, with $n_{MAX}$ a pre-set maximum number of time units TQ that the bit length $L_{BIT}$ may include;

(d3) as a function of the number m and of the maximum value $BRP_{MAX}$ previously obtained, the device obtains a value of the number n such that: $n = m/BRP_{MAX}$;

(d4) as a function of the number n previously obtained, the device obtains values for the length $L_{SYNC}$ of the synchronization segment, the length $L_{PRS}$ of the propagation segment and lengths $L_{PHS1}$ and $L_{PHS2}$ of the first and second phase segments.

4. Process according to claim 3, **characterised in that**, in step (d1), the value of the number m is given by the following equations:

- m = min(2P-G, G-P), if P < G < 2P,
- m = min (G-2P,P), if 2P <G < 6P,
- m = P/2, if G = 2P,
- m is not calculated in the other cases.

5. Process according to claim 4, **characterised in that**, in step (d1), the conditions for applying the equations giving the value of the number m are modified as follows:

- m = min (2P-G, G-P), if P + P/k < G ≤ 2(P-P/k),
- m = min (G-2P,P), if 2(P+P/k)<G < 6(P-P/k),
- m = P/2, if 2(P-P/k)<G ≤ 2(P+P/k),
- m is not calculated in the other cases,

with k a pre-set whole number greater than or equal to 4, and preferentially equal to 8.

6. Process according to any of claims 3 to 5, **characterised in that**, in step (d4), a pre-set correspondence table is used, associating with each value of the number n a set of values for the length $L_{SYNC}$ of the synchronisation segment, the length $L_{PRS}$ of the propagation segment and the lengths $L_{PHS1}$ and $L_{PHS2}$ of the first and second phase segments.

7. Process according to any of claims 1 to 6, **characterised in that** said at least one throughput adaptation condition in step (g) is the correct receipt (Rx OK) of a message coming from the network.

8. Process according to any of claims 1 to 7, **characterised in that** the step (g) is preceded by the following step:

(f) if the device detects the proper receipt of the useful part of a message coming from the network, it provisionally goes into normal mode to send an acknowledgement field (ACK) on the network then goes back to listen mode, otherwise it obtains a next transition of the signal, which delimits with the last previous transition a new signal level, it measures the duration of the new level, expressed as a period $T_H$ number of the device clock, and it reiterates steps (d) to (g) taking account of the new signal level.

9. Device intended to be connected to a network, **characterised in that** it includes means for automatically detecting the network throughput and for configuring with the detected throughput, the network transmitting a signal on which messages are carried including bits of length $L_{BIT}$ and of dominant or recessive type, **characterized in that** it includes:

- means for toggling from a normal mode to a listen mode, in which means are activated for blocking messages sent by the device to the network, the device continuing to receive messages coming from the network;
- means for obtaining a triplet of successive transitions in the signal transmitted on the network, said triplet delimiting a first and second level of the signal, one dominant and the other recessive;
- means for measuring the duration, expressed as a period $T_H$ number of a device clock, of each of the first and second signal levels;
- means for obtaining, as a function of the measured durations of the signal levels, a new throughput configuration by determining values for parameters that define the bit length $L_{BIT}$;
- means for validating the new throughput configuration;
- means for detecting that at least one throughput adaptation condition is verified;
- means for toggling from listen mode to normal mode, activated in the event of positive detection by the detection means;
- means for obtaining a next signal transition, which delimits with the last previous transition a new signal level, and means for measuring the duration of the new level, expressed as a period $T_H$ number of the device clock, activated with said means for obtaining and validating a new throughput configuration and said means for detecting that at least one throughput adaptation condition is verified, in the event of negative detection by the detection means, in such a way as to take account of the new signal level.

10. Device according to claim 9, **characterised in that** the network is a CAN bus, and **in that** the device includes a CAN microcontroller completed relative to a conventional CAN microcontroller and itself including said means for automatically detecting the throughput of the network and for configuring with the detected throughput.

11. Device according to claim 10, **characterized in that** the means for toggling from normal mode to listen mode include means for generating a mode selection signal (Autobaud), assuming the value "0" or "1" depending on whether the device is to operate in normal mode or listen mode respectively,
and **in that** the completed CAN microcontroller includes a modified conventional CAN microcontroller so as to itself include said means for automatically detecting the throughput of the network and for configuring with the detected throughput, apart from said means for blocking sent messages, and **in that** the means for blocking sent messages include means for embodying the "OR" logic function between the mode selection signal and the send signal (TxDC') of the modified conventional CAN microcontroller, the output signal of the means for embodying the "OR" logic function constituting the send signal (TxDC) of the completed CAN microcontroller.

12. Device according to claim 11, **characterised in that** includes loop means from the output to the input of the modified conventional CAN microcontroller, including:

- means for embodying the "AND" logic function between the second signal (TxDC') of the modified conventional CAN microcontroller and the receive signal (RxDC) of the completed CAN microcontroller;
- multiplexing means receiving at a first input the output signal of the means for embodying the "AND" logic function and at a second input the receive signal (RxDC) of the completed CAN microcontroller, the output signal of the multiplexing means constituting the receive signal (RxDC') of the modified conventional CAN microcontroller, the multiplexing means being controlled by the mode selection signal in such a way that the first and second input is selected depending on whether the mode selection signal assumes the value "1" or "0" respectively.

**13.** Device according to any of claims 9 to 12, **characterised in that** the completed CAN microcontroller additionally includes means for provisionally toggling from listen mode to normal mode, so as to send an acknowledgement field (ACK) on the network.

**14.** Device according to claim 13 and any of claims 11 and 12, **characterised in that** the means for provisionally toggling from listen mode to normal mode include means for generating a signal (EnAckB) for provisionally deactivating the mode selection signal, assuming the value "0" or "1" depending on whether the mode selection signal (Autobaud) is to be provisionally deactivated or not.

**Patentansprüche**

**1.** Verfahren zum automatischen Erfassen des Durchsatzes eines Netzwerkes und zum Konfigurieren mit dem erfassten Durchsatz mittels einer mit dem Netzwerk verbundenen Vorrichtung, wobei das Netzwerk ein Signal sendet, über das Meldungen befördert werden, welche Bits der Länge $L_{BIT}$ und der dominierenden oder rezessiven Art aufweisen, **dadurch gekennzeichnet, dass** es diese aufeinander folgenden Schritte aufweist:

(a) die Vorrichtung geht in einen Hörmodus über, in dem sie die Meldungen aus dem Netz empfangen, jedoch selbst keine Meldungen über das Netz senden kann;
(b) die Vorrichtung erzielt ein Triplett aufeinander folgender Übergänge in dem über das Netz gesendeten Signal, wobei dieses Triplett eine erste und eine zweite Ebene des Signals abgrenzt, wobei die eine dominant und die andere rezessiv ist;
(c) die Vorrichtung erfasst die Zeitdauer einer jeden der ersten und zweiten Ebenen, ausgedrückt als Periodenzahl $T_H$ einer Taktgeberuhr der Vorrichtung;
(d) als Funktion der gemessenen Zeitdauern der Ebenen des Signals erzielt die Vorrichtung eine neue Durchsatzkonfiguration durch Bestimmung der Werte für alle Parameter, welche die Bitlänge $L_{BIT}$ definieren;
(e) die Vorrichtung validiert die neue Durchsatzkonfiguration;
(g) wenn die Vorrichtung das tatsächliche Eintreffen mindestens einer Anpassungsbedingung feststellt, dann geht sie in einen Normalmodus über; ansonsten erzielt sie einen nachfolgenden Übergang des Signals, der mit dem letzten vorhergehenden Übergang eine neue Ebene des Signals abgrenzt, ausgedrückt in Zahl der Perioden $T_H$ der Taktgeberuhr der Vorrichtung und wiederholt die Schritte (d) bis (g),

wobei die neue Signalebene berücksichtigt wird.

**2.** Verfahren nach Anspruch 1, **dadurch gekennzeichnet, dass** das Netzwerk einen Bus des Typs CAN darstellt und dass die Vorrichtung einen CAN-Mikrocontroller umfasst, der im Verhältnis zu einem klassischen CAN-Mikrocontroller vervollständigt ist, so dass das Verfahren der automatischen Erfassung des Netzdurchsatzes und der automatischen Konfiguration beim erfassten Durchsatz zum Einsatz kommt.

**3.** Verfahren nach Anspruch 2, wobei die Bitlänge $L_{BIT}$ definiert wird durch:

- einen derartigen Skalar BRP, dass TQ = BRP * $T_H$, wobei TQ eine Zeiteinheit und $T_H$ die Periode der Taktgeberuhr der Vorrichtung darstellt;
- in Zahl von Zeiteinheiten TQ ausgedrückte Längen: Länge $L_{SYNC}$ eines Synchronisationssegmentes, Länge $L_{PRS}$ eines Ausbreitungssegmentes, welches das Ausgleichen einer physischen Verzögerung auf dem CAN-Bus anstrebt, Längen $L_{PHS1}$ und $L_{PHS2}$ des ersten und zweiten Phasensegmentes, welches das Positionieren eines Abtastungspunktes ermöglicht,

**dadurch gekennzeichnet, dass** der Schritt (d) selbst die folgenden Schritte aufweist:

(d0) die Vorrichtung aktualisiert zwei Historienregister in solcher Weise, dass:

- nach der ersten Wiederholung des Schrittes (d) die Register jeweils das Minimum P und das Maximum G der Zeitdauern der ersten und zweiten Ebenen enthalten;
- nach jeder nachfolgenden Wiederholung des Schrittes (d) werden die Register nach der folgenden Beziehung aktualisiert: wenn G < X, dann nimmt G den Wert X an, ansonsten nimmt P den Wert X an, wobei X die Zeitdauer der besagten neuen Signalebene darstellt;

(d1) als Funktion des Inhaltes P und G der besagten Historienregister erzielt die Vorrichtung eine Zahl m, die das Ausdrücken der Bitlänge $L_{BIT}$ als Funktion der Periode $T_H$ der Taktgeberuhr der Vorrichtung ermöglicht: $L_{BIT} = m * T_H$;

(d2) als Funktion der vorher erzielten Zahl m erzielt die Vorrichtung einen Maximalwert $BRP_{MAX}$ des Skalars BRP, wobei folgendes gilt:

(i)

$$L_{BIT} = m * T_H = n * BRP * T_H, \text{ woraus folgt: } m = n * BRP$$

(ii)

$$n = L_{BIT} / TQ$$

(iii) $n \leq n_{MAX}$, wobei $n_{MAX}$ eine vorgegebene Maximalzahl der Zeiteinheit TQ darstellt, welche die Bitlänge $L_{BIT}$ umfassen kann;

(d3) als Funktion der vorher erzielten Zahl m und des Maximalwertes $BRP_{MAX}$ erzielt die Vorrichtung einen Wert der Zahl n derart, dass $n = m / BRP_{MAX}$;

(d4) als Funktion der vorher erzielten Zahl n erzielt die Vorrichtung Werte für die Länge $L_{SYNC}$ des Synchronisationssegmentes, die Länge $L_{PRS}$ des Fortpflanzungssegmentes und der Längen $L_{PHS1}$ und $L_{PHS2}$ der ersten und zweiten Phasensegmente.

4. Verfahren nach Anspruch 3, **dadurch gekennzeichnet, dass** im Schritt (d1) der Wert der Zahl m durch die nachfolgenden Beziehungen gegeben ist:

- $m = \min (2P - G, G - P)$, wenn $P < G < 2P$,
- $m = \min (G - 2P, P)$, wenn $2P < G < 6P$,
- $m = P/2$, wenn $G = 2P$,
- m wird in den anderen Fällen nicht berechnet.

5. Verfahren nach Anspruch 4, **dadurch gekennzeichnet, dass** im Schritt (d1) die Bedingungen für die Anwendung der Beziehungen, welche den Wert der Zahl m ergeben, folgendermaßen geändert werden:

- $m = \min (2P - G, G - P)$, wenn $P + P/k < G \leq 2(P - P/k)$,
- $m = \min (G - 2P, P)$, wenn $2(P + P/k) < G < 6(P - P/k)$,
- $m = P/2$, wenn $2(P - P/k) < G \leq 2(P + P/k)$,
- m wird in den anderen Fällen nicht berechnet,

wobei k eine vorgegebene ganze Zahl größer oder gleich 4 und bevorzugterweise gleich 8 ist.

6. Verfahren nach einem der Ansprüche 3 bis 5, **dadurch gekennzeichnet, dass** man beim Schritt (d4) eine vorgegebene Entsprechungstabelle anwendet, welche jedem Wert der Zahl n einen Satz von Werten für die Länge $L_{SYNC}$ des Synchronisationssegmentes, für die Länge $L_{PRS}$ des Ausbreitungssegmentes und für die Längen $L_{PHS1}$ und $L_{PHS2}$ der ersten und zweiten Phasensegmente zuordnet.

7. Verfahren nach einem der Ansprüche 1 bis 6, **dadurch gekennzeichnet, dass** die besagte mindestens eine Bedingung zur Anpassung des Durchsatzes im Schritt (g) der korrekte Empfang (Rx OK) einer aus dem Netz kommenden Meldung ist.

8. Verfahren nach einem der Ansprüche 1 bis 7, **dadurch gekennzeichnet, dass** vor dem Schritt (g), der folgende Schritt kommt:

(f) wenn die Vorrichtung den guten Empfang des nützlichen Teils einer aus dem Netz kommenden Meldung erfasst, so geht sie vorübergehend in den Normalmodus über, um ein Bestätigungsfeld (ACK) über das Netz zu senden, und kehrt dann in den Hörmodus zurück; ansonsten erzielt sie einen nachfolgenden Übergang des Signals, der mit dem letzten vorhergehenden Übergang eine neue Signalebene abgrenzt, sie misst die Länge der neuen Ebene, die in der Periodenzahl $T_H$ der Taktgeberuhr der Vorrichtung ausgedrückt wird und wiederholt dann die Schritte (d) bis (g), wobei die neue Signalebene berücksichtigt wird.

9. Vorrichtung zum Anschließen an ein Netzwerk, **dadurch gekennzeichnet, dass** sie Mittel zum automatischen Erfassen des Durchsatzes des Netzwerkes und zum Konfigurieren beim erfassten Durchsatz umfasst, wobei das Netz ein Signal sendet, über welches Meldungen befördert werden, die Bits der Länge $L_{BIT}$ dominanter oder rezessiver Art aufweisen, **dadurch gekennzeichnet, dass** sie folgendes umfasst:

   - Mittel zum Wechseln aus einem Normalmodus in einen Hörmodus, in dem Mittel zum Blockieren von Meldungen aktiviert werden, welche von der Vorrichtung zum Netz gesendet werden, wobei die Vorrichtung weiterhin vom Netz kommende Meldungen empfängt;
   - Mittel zum Erzielen eines Tripletts aufeinander folgender Übergänge in dem über das Netz gesendeten Signal, wobei dieses Triplett eine erste und eine zweite Signalebene abgrenzt, wobei die eine dominant und die andere rezessiv ist;
   - Mittel zum Messen der Zeitdauer einer jeden der ersten und zweiten Signalebenen, ausgedrückt als Periodenzahl $T_H$ einer Taktgeberuhr der Vorrichtung;
   - Mittel zum Erzielen einer neuen Durchsatzkonfiguration durch Bestimmung der Werte von Parametern, welche die Bitlänge $L_{BIT}$ als Funktion der gemessenen Zeitdauern der Signalebenen definieren;
   - Mittel zum Validieren der neuen Durchsatzkonfiguration;
   - Mittel zum Erfassen der Tatsache, dass mindestens eine Bedingung der Durchsatzanpassung erfüllt ist;
   - Mittel zum Wechseln aus dem Hörmodus in den Normalmodus, die im Falle der positiven Erfassung durch die Erfassungsmittel aktiviert werden;
   - Mittel zum Erzielen eines nachfolgenden Signalübergangs, wobei dieser Übergang zusammen mit dem letzten vorhergehenden Übergang eine neue Signalebene abgrenzt sowie Mittel zum Messen der Zeitdauer der neuen Ebene, ausgedrückt nach der Periodenzahl $T_H$ der Taktgeberuhr der Vorrichtung, wobei diese Mittel mit den Mitteln zum Erzielen der Validierung einer neuen Durchsatzkonfiguration und den Mitteln zum Erfassen der Tatsache, dass mindestens eine Bedingung der Durchsatzanpassung erfüllt ist, im Falle der negativen Erfassung durch die Erfassungsmittel aktiviert werden, damit die neue Signalebene berücksichtigt wird.

10. Vorrichtung nach Anspruch 9, **dadurch gekennzeichnet, dass** das Netz ein CAN-Bus darstellt und dass die Vorrichtung einen CAN-Mikrokontroller aufweist, der im Verhältnis zu einem klassischen CAN-Mikrocontroller vervollständigt ist und selbst die Mittel zur automatischen Erfassung des Durchsatzes des Netzwerkes und zur automatischen Konfiguration beim erfassten Durchsatz aufweist.

11. Vorrichtung nach Anspruch 10, **dadurch gekennzeichnet, dass** die Mittel zum Wechseln von dem Normalmodus in den Hörmodus Mittel zum Erzeugen eines Signals zur Modusauswahl (Autobaud) umfassen, welches den Wert "0" oder "1" annimmt, je nachdem ob die Vorrichtung im Normalmodus bzw. im Abhörmodus arbeiten soll und dass der vervollständigte CAN-Mikrocontroller einen klassischen CAN-Mikrocontroller aufweist, der so geändert ist, dass er selbst die Mittel zur automatischen Erfassung des Netzdurchsatzes und zur automatischen Konfiguration beim erfassten Durchsatz aufweist, mit Ausnahme der besagten Mittel zum Blockieren von gesendeten Meldungen und dass die Mittel zum Blockieren der gesendeten Meldungen Mittel zum Realisieren der logischen "ODER" Funktion zwischen dem Signal zur Modusauswahl und dem Sendesignal (TxDC') des klassischen geänderten CAN-Mikrocontroller aufweisen, wobei das Ausgangssignal der Mittel zum Realisieren der "ODER" Funktion das Sendesignal (TxDC) des vervollständigten CAN-Mikrocontrollers bildet.

12. Vorrichtung nach Anspruch 11, **dadurch gekennzeichnet, dass** der vervollständigte CAN-Mikrocontroller ferner Mittel zum Rückkoppeln des Ausgangs an den Eingang des klassischen geänderten CAN-Mikrocontrollers aufweist, die folgendes umfassen:

   - Mittel zum Realisieren der logischen "UND" Funktion zwischen dem Sendesignal (TxDC') des klassischen geänderten CAN-Mikrocontrollers und dem Empfangssignal (RxDC) des vervollständigten CAN-Mikrocontrollers;
   - Mittel zum Multiplexen, die an einen ersten Eingang das Ausgangssignal der Mittel zum Realisieren der logischen "UND"-Funktion und an einem zweiten Eingang das Empfangssignal (RxDC) des vervollständigten CAN-Mirkocontrollers empfangen,

wobei das Ausgangssignal der Mittel zum Multiplexen das Empfangssignal (RxDC') des klassischen geänderten CAN-Mikrocontrollers darstellt, wobei die Mittel zum Multiplexen derart vom Modusauswahlsignal gesteuert werden, dass der erste oder der zweite Eingang gewählt wird, je nachdem ob das Modusauswahlsignal den Wert "1" bzw. "0" annimmt.

**13.** Vorrichtung nach einem der Ansprüche 9 bis 12, **dadurch gekennzeichnet, dass** der vervollständigte CAN-Mikrocontroller ferner Mittel zum vorübergehendem Wechseln aus dem Hörmodus in den Normalmodus aufweist, um ein Bestätigungsfeld (ACK) über das Netz zu senden.

**14.** Vorrichtung nach Anspruch 13 und nach einem der Ansprüche 11 oder 12, **dadurch gekennzeichnet, dass** die Mittel zum vorübergehenden Wechseln aus dem Hörmodus in den Normalmodus Mittel zum Erzeugen eines Signals (EnAckB) zum vorübergehenden Deaktivieren des Modussauswahlsignals aufweisen, das den Wert "0" oder "1" annimmt, je nachdem ob das Modusauswahlsignal (Autobaud) vorübergehend deaktiviert werden muss oder nicht.

Fig. 1

Fig. 2

Fig. 3

Fig. 4

passage dans le mode d'écoute — a

obtention d'un triplet de transitions délimitant un premier et un second niveaux — b

mesure de la durée des premier et seconds niveaux — c

. obtention de la transition suivante

. mesure de la durée du nouveau niveau

f3/g3

mise à jour de P et G — d0

obtention de m en fonction de P et G — d1

obtention de BRPmax — d2

obtention de n — d3

obtention de Lsync, Lprs, Lphs1 et Lphs2 — d4

d

validation de la nouvelle configuration — e

détection de la bonne réception de la partie utile d'un message (CRC OK ?) ? — f1

non

oui

passage en mode normal pour l'envoi d'un champ d'acquittement (ACK) puis retour au mode d'écoute — f2

f

détection réception correcte ? (Rx OK ?) — g1

non

oui

**Fig. 5**

passage dans le mode normal — g2

g

160    161         162

AUTOBAUD=0

1$^{er}$ message

2$^{nd}$ message

7x"1"

t

(calcul Lbit)

(configuration Lbit)
(vérification CRC et envoi champ ACK)

RxOK

EnACKB=0

**Fig. 16**

Envoi ACK

Signal
transmis sur
le réseau (RxDC)

61  66  62  67  63  64  68

ax LBIT    bx LBIT    cx LBIT

Horloge du
dispositif

$T_H$

## Fig. 6

71

P <="FFFF";
G <="FFFF";

attente
autobaud
= 1

CanEnableB ='0' & AutoBaud ='1'

AutoBaud='0'

attente
1$^{er}$ front
descendant

72

G > 6 (P-P/8)

⌐RXD

attente
1$^{er}$ front
montant

73

⌐RXD
P <= C1 ; G <= C1

attente front
descendant

EnCompare <= '0';

⌐RXD
si G < C2 alors G <= C2
sinon P <= C2
EnCompare <= '1';

74

attente front
montant

EnCompare <= '0';

75

⌐RXD
si G < C1 alors G <= C1
sinon P <= C1
EnCompare <= '1';

## Fig. 7

Fig. 8

Fig. 9

101

103

25 →

X

A

registre de stockage de BRPmax

104

Compteur

En

102

Comp
A < B

m →

B

En

**Fig. 10**

111

113

BRPmax →

X

A

registre de stockage de n

114

Compteur

En

112

Comp
A < B

m →

B

En

**Fig. 11**

| n | L$_{SYNC}$ | L$_{PRS}$ | L$_{PHS1}$ | L$_{PHS2}$ | Point d'échantillonnage à …% de la longueur du bit |
|---|---|---|---|---|---|
| <8 | 1 | 3 | 2 | 2 | ~80% |
| 8 | 1 | 3 | 2 | 2 | 80% |
| 9 | 1 | 3 | 3 | 2 | 78% |
| 10 | 1 | 3 | 3 | 3 | 70% |
| 11 | 1 | 4 | 3 | 3 | 73% |
| 12 | 1 | 4 | 4 | 3 | 75% |
| 13 | 1 | 4 | 4 | 4 | 69% |
| 14 | 1 | 5 | 4 | 4 | 71% |
| 15 | 1 | 5 | 5 | 4 | 73% |
| 16 | 1 | 5 | 5 | 5 | 69% |
| 17 | 1 | 6 | 5 | 5 | 71% |
| 18 | 1 | 6 | 6 | 5 | 72% |
| 19 | 1 | 6 | 6 | 6 | 68% |
| 20 | 1 | 7 | 6 | 6 | 70% |
| 21 | 1 | 7 | 7 | 6 | 71% |
| 22 | 1 | 7 | 7 | 7 | 68% |
| 23 | 1 | 8 | 7 | 7 | 70% |
| 24 | 1 | 8 | 8 | 7 | 71% |
| 25 | 1 | 8 | 8 | 8 | 68% |
| >25 | 1 | 8 | 8 | 8 | ~70% |

**Fig. 12**

**Fig. 13**

**Fig. 14**

**Fig. 15**